# EUROPÄISCHE PATENTSCHRIFT

(11) **EP 2 154 948 B1**
(45) Veröffentlichungstag und Bekanntmachung des Hinweises auf die Patenterteilung: **05.07.2017**
(21) Anmeldenummer: 08759553.4
(22) Anmeldetag: 13.05.2008
(51) Int. Cl.: A01J 5/04

(54) **MELKEN VON TIEREN UNTER REDUZIERTER ZITZENBELASTUNG**
MILKING OF ANIMALS WITH REDUCED TEAT STRESS
TRAITE D'ANIMAUX AVEC RÉDUCTION DE LA CONTRAINTE SUR LES MAMELLES

(30) Priorität: 11.05.2007 DE 102007022801; 14.11.2007 DE 102007054725
(43) Veröffentlichungstag der Anmeldung: 24.02.2010
(73) Patentinhaber: GEA WestfaliaSurge GmbH, 59199 Bönen (DE)
(72) Erfinder: AUBURGER, Markus, 59558 Lippstadt (DE); NEUMANN, Martin, 59302 Oelde (DE); ROHRIG, Thomas, 44141 Dortmund (DE)
(74) Vertreter: Neumann, Ditmar
(86) Internationale Anmeldenummer: PCT/EP2008/055852
(87) Internationale Veröffentlichungsnummer: WO 2008/138931

(56) Entgegenhaltungen:
- EP-A- 1 872 653
- WO-A-03/069981
- GB-A- 552 476
- GB-A- 784 008
- GB-A- 1 197 747

## Beschreibung

Der Gegenstand der Erfindung bezieht sich auf einen Milchschlauch, eine Melkeinheit umfassend ein Milchsammelstück und wenigstens zwei mit dem Milchsammelstück verbundene Milchschläuche, einen Melkbecher umfassend eine Melkbecherhülse, in der ein Zitzengummi angeordnet ist, und einen mit dem Zitzengummi verbundenen Milchschlauch sowie ein Melkzeug umfassend ein Milchsammelstück, wenigstens zwei Melkbecher, die jeweils eine Melkbecherhülse und ein in der Melkbecherhülse angeordnetes Zitzengummi aufweisen, und Milchschläuche, die die Melkbecher mit dem Milchsammelstück verbinden.

Obwohl im Folgenden die Erfindung in Verbindung mit dem Melken von Kühen beschrieben wird, wird darauf hingewiesen, dass sich der Gegenstand der Erfindung, insbesondere zur Verwendung beim Melken von Schafen, Ziegen, Lamas, Kamelen, Dromedaren, Büffeln, Stuten, Eseln, Yaks sowie anderen milchabgebenden Tieren eignet. Die Erfindung kann sowohl bei robotergestützten Melkanlagen als auch bei vollautomatischen, halbautomatischen sowie konventionellen Melkanlagen eingesetzt werden.

Zum Melken eines Tieres ist es notwendig, dass die Melkbecher an die Zitzen eines Tieres angebracht werden. Die Anbringung der Melkbecher kann robotergestützt erfolgen. Es ist auch bekannt, dass Melkbecher manuell an die Zitzen des Tieres angebracht werden. Die Melkbecher weisen ein Zitzengummi auf, welches in einer Melkbecherhülse angeordnet ist. Das Zitzengummi ist mit einem Milchschlauch verbunden.

Es sind Ausführungsformen bekannt, bei denen der Milchschlauch unmittelbar, d. h. ohne Zwischenschaltung eines Milchsammelstücks, mit einer Milchtransportleitung verbunden ist.

Melkzeuge umfassend Melkbecher und ein Milchsammelstück sind bekannt. Durch die WO 01/84913 ist ein Melkzeug bekannt, welches ein Milchsammelstück aufweist. Das Milchsammelstück weist Anschlussstutzen auf, die mit Milchschläuchen verbunden sind. Die Milchschläuche sind mit ihren anderen Enden mit Melkbechern verbunden. In der durch die WO 01/84913 A1 bekannten Ausgestaltung eines Melkzeugs sind die Milchschläuche als Wellenschläuche ausgebildet. Weitere Ausführungsformen von Melkzeugen sind beispielsweise aus den Druckschriften DE-A1-102 12 161, WO-A1-00/76299 und WO-A1-00/76300 bekannt.

Die in diesen Druckschriften beschriebenen Melkzeuge weisen Sammelstücke auf, die Anschlussstutzen aufweisen, mit denen die Milchschläuche verbunden sind.

Durch die DE-A1-102 07 955 ist eine noch weitere Ausführungsform eines Melkzeugs bekannt. Das Melkzeug umfasst ein Milchsammelstück sowie Milchschläuche. Das eine Ende eines jeden Milchschlauchs ist mit dem Milchsammelstück und das andere Ende mit einem Melkbecher verbunden.. Das Milchsammelstück weist Öffnungen auf. In jede Öffnung wird ein Endbereich eines Milchschlauchs eingeführt, so dass eine fluiddichte Verbindung zwischen dem Milchschlauch und dem Milchsammelstück entsteht.

Die Milchschläuche sind mit dem Milchsammelstück so verbunden, dass ein definiertes Abknicken erreicht wird. Durch das Abknicken soll im Wesentlichen ein Abdichten des Milchschlauchs gewährleistet werden, wenn die Melkbecher nicht an den Zitzen angebracht sind. Hierzu ist nach der DE-A1-102 07 955 ein Knickstellenelement mit einer vom Anschlussbereich des Milchschlauchs beabstandeten Biegekante vorgesehen, die einen Biegebereich im Milchschlauch definiert.

Durch die US-A1-5,080,041 ist ein gebogener Milchschlauch bekannt, durch welchen die Beanspruchung des Milchschlauchs am Anschlussstutzen des Milchsammelstücks verringert werden soll.

Durch die GB 552,476 ist eine Melkeinheit umfassend ein Milchsammelstück und wenigstens zwei mit dem Milchsammelstückverbundene Milchschläuche bekannt. Es ist wenigstens eine lösbare Klemmverbindung zum Festlegen wenigstens eines Milchschlauchs relativ zum Milchsammelstück vorgesehen, wobei die Klemmverbindung wenigstens zwei Klemmbacken umfasst, zwischen denen ein am Endbereich des Milchschlauchs ausgebildeter Klemmkörper positionierbar ist.

Es ist bekannt, dass die Physiognomie des Euters, insbesondere der Zitzen von Tierart zu Tierart, von Rasse zu Rasse und von Tier zu Tier sehr unterschiedlich ausgebildet sein kann. Es ist auch bekannt, dass beispielsweise die Abstände der vorderen Zitzen zueinander anders sind als die Abstände der hinteren Zitzen. Dem wird durch eine entsprechende Anpassung der Abstände der Anschlussstutzen am Milchsammelstück Rechnung getragen. Darüber hinaus ist bekannt, dass die Melkbecher unterschiedliche Gestalt oder Gewicht aufweisen können, um an die Tiere besser angepasst zu werden.

Hiervon ausgehend liegt der vorliegenden Erfindung die Zielsetzung zugrunde, einen Milchschlauch anzugeben, der verbesserte Eigenschaften hat.

Diese Aufgabe wird erfindungsgemäß durch einen Milchschlauch gemäß Anspruch 1 gelöst. Vorteilhafte Weiterbildungen und Ausgestaltungen des erfindungsgemäßen Milchschlauchs sind Gegenstand der jeweiligen Unteransprüche.

Der erfindungsgemäße Milchschlauch weist an wenigstens einem Ende einen im Wesentlichen kugelförmig ausgebildeten Klemmkörper auf. Der Mittelpunkt des Klemmkörpers ist versetzt zur Längsachse des Milchschlauchs.

Zusätzlich oder alternativ kann der Klemmkörper so ausgebildet sein, dass dieser einen Kanal mit einer Mündung aufweist, wobei die Längsachse des Milchschlauchs eine Ebene, in der die Querschnittsfläche der Mündung liegt, unter einem von 90° verschiedenen Winkel durchdringt. Durch diese erfindungsgemäße Ausgestaltung des Milchschlauchs wird dem Umstand Rechnung getragen, dass beispielsweise im Anschlussbereich des Milchschlauchs am Milchsammelstück lediglich ein begrenzter Platz zur Verfügung steht. Der erfindungsgemäße Milchschlauch hat auch den Vorteil, dass eine Winkeleinstellung ermöglicht wird, so dass eine verbesserte Anpassung der Stellung des Milchschlauchs erreicht wird. Darüber hinaus wird eine fluiddichte Verbindung des Milchschlauchs mit einem Sammelstück oder einem Melkbecher erreicht.

Durch die erfindungsgemäße Ausgestaltung des Milchschlauchs wird auch erreicht, dass ein im Wesentlichen umlaufender konstanter Andruck des Klemmkörpers gegen eine Dichtfläche gewährleistet wird. Insbesondere dann, wenn der Klemmkörper aus einem elastomeren Werkstoff hergestellt ist, wird dennoch eine fluiddichte Verbindung sicher gestellt. Insbesondere wird durch die Formgebung erreicht, dass der Klemmkörper nicht durch elastische Verformung an der Dichtfläche undicht wird.

Um einen Winkel der Längsachse des Milchschlauchs bezüglich eines Milchsammelstücks von vorzugsweise 30° bis 60° zu ermöglichen, ist es notwendig, einen kugelförmigen Klemmkörper vorzusehen, der einen relativ großen Durchmesser aufweist. Durch die erfindungsgemäße Ausgestaltung des Milchschlauchs, insbesondere des Klemmkörpers, kann der Durchmesser des Klemmkörpers reduziert werden, wodurch auch den Platzverhältnissen am Milchsammelstück Rechnung getragen wird.

Alternativ oder zusätzlich kann der Mittelpunkt des Klemmkörpers bezüglich der Längsachse verschoben sein, so dass eine größere Dichtfläche erreicht wird. Zusätzlich oder anstelle der Verschiebung des Mittelpunktes des Klemmkörpers wird vorgeschlagen, dass der Klemmkörper einen Kanal mit einer Mündung aufweist, wobei die Längsachse des Milchschlauchs eine Ebene, in der die Querschnittsfläche der Mündung liegt, unter einem von 90° verschiedenen Winkel durchdringt. Hierdurch wird ein geeigneter Auslauf geschaffen, wodurch auch die Größe des Klemmkörpers reduziert werden kann.

Gemäß einer vorteilhaften Weiterbildung des Milchschlauchs wird auch vorgeschlagen, dass der Klemmkörper aus wenigstens zwei unterschiedlich großen im Wesentlichen kugelförmig ausgebildeten Teilen gebildet ist. Die zwei Teile weisen vorzugsweise eine Trennebene auf, die unter einem Winkel von 35° bis 40° gegenüber der Milchschlauchachse geneigt ist. Besonders vorteilhaft ist dabei eine Ausgestaltung, bei der die Teile jeweils eine Achse aufweisen, die auf einer Geraden liegen, wobei diese Gerade in einer Symmetrieebene des Milchschlauchs liegt.

Durch diese bevorzugten Ausgestaltungen des Milchschlauchs wird eine vereinfachte Montage erreicht. Zudem werden die Abmessungen der korrespondierenden Klemmeinheit verringert sowie deren Herstellung vereinfacht. Dadurch, dass die wenigstens zwei Teile des Klemmkörpers unterschiedlich groß sind, entsteht vorzugsweise ein umlaufender Rand, der sich an der Klemmeinheit abstützen kann und auf diese Weise zu einer verbesserten Anpresswirkung führt. Zudem wird durch diesen Rand die Klemmeinheit gegen Verschmutzung abgedichtet. Dies ist bedeutsam, da der Milchschlauch zum Melken eines Tieres genutzt wird, und Milch ein Lebensmittel ist, das besonderen hygienischen Vorschriften unterliegt.

Gemäß einer noch weiteren vorteilhaften Ausgestaltung des erfindungsgemäßen Milchschlauchs wird vorgeschlagen, dass wenigstens ein Teil des Klemmkörpers im Querschnitt im Wesentlichen ellipsenförmig ausgebildet wird. Hierdurch wird eine steilere Anlagefläche im Vergleich zu einer kreisförmigen Querschnittsform für die korrespondierende Klemmeinheit geschaffen.

Um einen ausreichenden Milchfluss durch den Milchschlauch zu erreichen, weist der Milchschlauch einen Innendurchmesser auf, der zwischen 7 und 14 mm liegt. Da der Milchschlauch einem Vakuum ausgesetzt wird, ist es notwendig, dass der Milchschlauch, der aus einem elastischen Material gebildet ist, eine entsprechend hohe Vakuumstabilität aufweist. Bevorzugt ist dabei eine Ausgestaltung eines Milchschlauchs, bei der das Verhältnis von Innendurchmesser des Milchschlauchs zum Außendurchmesser des Milchschlauchs zwischen 0,35 und 0,65 liegt. Bei solchen geometrischen Verhältnissen wird vorgeschlagen, dass das Verhältnis zwischen dem Durchmesser des Klemmkörpers und dem Außendurchmesser des Milchschlauchs zwischen 1,2 und 3, insbesondere bei circa 1,4 liegt.

Nach einer noch weiteren vorteilhaften Ausgestaltung des Milchschlauchs wird vorgeschlagen, dass der Klemmkörper einen Bereich mit einer im Wesentlichen teilzylindrischen Mantelfläche aufweist. Hierdurch wird ein Milchschlauch mit noch weiter verbesserten Eigenschaften bereitgestellt.

Die als Dichtflächen im montierten Zustand des Milchschlauchs dienenden Flächen sind bei dem erfindungsgemäßen Milchschlauch mit einem entsprechend ausgebildeten Klemmkörper als Teile der Kugeloberfläche ausgebildet. Diese Flächenabschnitte ermöglichen somit auch eine verbesserte Anpassung bzw. Ausrichtung des Milchschlauchs relativ zu einem Milchsammelstück.

Die teilzylindrische Ausbildung der Mantelfläche hat auch den Vorteil, dass der Milchschlauch in Verbindung mit einem Zitzengummi einfacherer herstellbar. Insbesondere die Entformung des Milchschlauchs mit einem Zitzengummi wird vereinfacht.

Bevorzugt ist eine Ausgestaltung des Milchschlauchs, bei der der Mittelpunkt des Klemmkörpers versetzt zur Längsachse des Milchschlauchs ist. Handelt es sich bei dem Klemmkörper um einen im Wesentlichen kugelförmig ausgebildeten Klemmkörper, so liegt der Mittelpunkt des Klemmkörpers versetzt zur Längsachse des Milchschlauchs. Hierdurch wird eine verbesserte Überdeckung des Klemmkörpers im montierten Zustand erreicht, da dieser Versatz zu einer verbesserten Krafteinleitung sowie zu einer größeren Variabilität bezüglich der Positionswahl führt. Wird der Klemmkörper durch eine im Wesentlichen in Form einer Kugelpfanne ausgebildeten Klemmbacke festgelegt, so führt der Versatz des Kugelmittelpunktes zu einer deutlich besseren Überdeckung des Klemmkörpers von oben bei gleichem Kugeldurchmesser. Dies führt insbesondere dazu, dass ein größerer Bewegungsspielraum im Bereich der Dichtflächen erreicht wird. So wird eine zentrale Krafteinleitung in Richtung der Symmetrieachse einer Klemmbacke am Milchsammelstück, die als zweite Dichtfläche dient, in vielen Positionen gewährleistet.

Wird gefordert, dass der Klemmkörper im Wesentlichen vollständig umfasst wird, um den Milchschlauch sicher und zuverlässig in einer bestimmten Position zu arretieren, so wäre es notwendig, dass der im Wesentlichen kugelförmig ausgebildete Klemmkörper vollständig oder nahezu vollständig umfasst wird. Dies führt jedoch dazu, dass die Ausgestaltung eines Milchsammelstückes mit entsprechenden Klemmbacken entsprechend groß und unhandlich ausfällt. Es wird daher gemäß einer weiteren vorteilhaften Ausgestaltung des erfindungsgemäßen Milchschlauchs vorgeschlagen, dass die Mantelfläche im Wesentlichen ellipsenförmig ausgebildet ist.

Bereits dadurch, dass der Abschnitt im Wesentlichen zylinderförmig ausgebildet ist, wird erreicht, dass die Größe des Klemmkörpers auf ein bestimmtes Maß reduziert werden kann. Bei einer ellipsenförmigen Ausgestaltung des Bereichs wird erreicht, dass der Klemmkörper seitlich schmaler wird, was besser für die Abmessung der Klemmeinheit ist. Gleichzeitig ist durch den im Wesentlichen nach oben gerichteten größeren Radius der Ellipse der Stützrand des Klemmkörpers im Bereich der stärksten Belastung vergrößert. Diese tritt beispielsweise dann auf, wenn der Milchschlauch mit einem Melkbecher verbunden ist, und dieser herunterhängt. Der Stützrand liegt im Eingriffsbereich der Klemmbacke der Klemmeinheit, wobei dieser größer ist als bei einem einfachen zylindrischen Abschnitt. So wird auch die Gefahr eines Herausrutschens des Klemmkörpers aus einer Klemmeinheit unter Belastung minimiert.

Gemäß einer noch weiteren Aufgabenstellung liegt der vorliegenden Erfindung die Zielsetzung zugrunde, eine Melkeinheit umfassend ein Milchsammelstück und wenigstens zwei mit dem Milchsammelstück verbundene Milchschläuche anzugeben, die eine noch weitere verbesserte Anpassung an Tiere ermöglicht.

Diese Aufgabe wird erfindungsgemäß durch eine Melkeinheit umfassend ein Milchsammelstück und wenigstens zwei mit dem Milchsammelstück verbundene Milchschläuche gemäß Anspruch 11 gelöst. Vorteilhafte Weiterbildungen und Ausbildungen der erfindungsgemäßen Melkeinheit sind Gegenstand der jeweiligen Unteransprüche.

Die erfindungsgemäße Melkeinheit weist ein Milchsammelstück und wenigstens zwei mit dem Milchsammelstück verbundene Milchschläuche und wenigstens eine lösbare Klemmverbindung zum Festelegen wenigstens eines Milchschlauchs relativ zum Milchsammelstück auf, wobei die Klemmverbindung wenigstens zwei Klemmbacken umfasst, zwischen denen ein am Endbereich des Milchschlauchs ausgebildeter Klemmkörper positionierbar ist. Die erfindungsgemäße Melkeinheit zeichnet sich dadurch aus, dass der wenigstens eine Milchschlauch, an wenigstens einem Ende einen im Wesentlichen kugelförmig ausgebildeten Klemmkörper aufweist, wobei der Mittelpunkt des Klemmkörpers versetzt zur Längsachse S des Milchschlauchs liegt und/oder der Klemmkörper einen Kanal mit einer Mündung aufweist, wobei die Längsachse S eine Ebene, in der die Querschnittsfläche der Mündung liegt, unter einem von 90° verschiedenen Winkel durchdringt.

Durch diese erfindungsgemäße Ausgestaltung der Melkeinheit werden Kräfte und Momente, die durch den Milchschlauch in einen mit dem Milchschlauch verbundenen Melkbecher eingeleitet werden, reduziert. Dies wird dadurch erreicht, dass durch die einstellbare, insbesondere gelenkige Verbindung eine Anpassung an die zu melkenden Tiere erreicht werden kann, so dass der Winkel, unter dem der Milchschlauch mit dem Sammelstück verbunden ist, in positiver Weise verändert werden kann. Durch die Verbindung zwischen dem Milchsammelstück und dem wenigstens einen Milchschlauch wird auch eine Ausrichtung erreicht. Die Klemmverbindung ist arretierbar ausgestaltet. Hierdurch wird die Möglichkeit geschaffen, vorzugsweise vor Ort, d. h. im Milchviehbetrieb, eine Anpassung der Melkeinheit an die zu melkenden Tiere vorzunehmen. Dies ist insbesondere dann vorteilhaft, wenn die Herde im Wesentlichen homogen ist.

Innerhalb eines Milchviehbetriebes können auch mehrere Gruppen von Melkplätzen vorhanden sein, welche die erfindungsgemäßen Melkeinheiten aufweisen. Innerhalb einer Gruppe von Melkplätzen können die Melkeinheiten so ausgestaltet sein, dass diese gleiche Voreinstellungen hinsichtlich des Winkels der Melkbecher bezüglich des Milchsammelstücks aufweisen. Die Melkeinheiten innerhalb wenigstens einer anderen Gruppe können Melkeinheiten aufweisen, deren Winkeleinstellung sich von der Winkeleinstellung wenigstens einer anderen Gruppe unterscheidet. Durch Vorsortierung der Tiere kann eine verbesserte Anpassung erreicht werden, so dass Tiere, deren Zitzen im Wesentlichen gleichartig oder gleich am Euter ausgeformt sind, der einen Gruppe zugeordnet werden und Tiere, deren Zitzen hinsichtlich der Form und/oder Anordnung bezüglich des Euters anders ausgestaltet sind, wenigstens einer anderen Gruppe zugeordnet werden. Durch diese Maßnahme wird der Melkvorgang innerhalb des Milchviehbetriebes vereinfacht, insbesondere das Ansetzen der Melkbecher an die Zitzen des Tieres.

Durch die erfindungsgemäße Ausgestaltung der Melkeinheit werden die beim Melken auftretenden Kräfte auf die Zitze verringert, da durch die gelenkige Verbindung, welche arretierbar ist, eine gezielte Ausrichtung der Melkbecher erreicht werden kann. Insbesondere wird durch die gezielte Ausrichtung der mit dem Milchschlauch verbundenen Melkbecher erreicht, dass diese möglichst in der Richtung der Zitzenachse ausgerichtet sind.

Zu einer noch weiteren Verbesserung der Ausrichtung des Milchschlauchs relativ zum Sammelstück wird vorgeschlagen, dass die Klemmverbindung so ausgebildet ist, dass der Endbereich des Milchschlauchs bei gelöster Klemmverbindung wenigstens zwei Freiheitsgrade aufweist.

Nach einer noch weiteren vorteilhaften Ausgestaltung der erfindungsgemäßen Melkeinheit wird vorgeschlagen, dass die Klemmverbindung einen kugelförmigen Klemmkörper und Klemmbacken aufweist, wobei der kugelförmige Klemmkörper mit dem Milchschlauch verbunden ist. Die Klemmbacken dienen der Arretierung, so dass nach Einstellung eines bestimmten Winkels der Milchschlauch in dieser Position am Milchsammelstück festgelegt wird. Im festgelegten Zustand ist das Gelenk nicht beweglich. Es muss die Klemmkraft reduziert bzw. aufgehoben werden, um den eingestellten Winkel zu verändern. Es ist nicht zwingend, dass die Klemmbacke zweiteilig ausgebildet ist. Es ist ausreichend, wenn die Klemmbacke einteilig ausgebildet ist. Die Ausbildung der Klemmbacke kann am Milchsammelstück erfolgen. Die Klemmbacke kann einstückig beispielsweise mit einem Deckel eines Milchsammelstücks ausgebildet sein. Bei einer zweiteiligen Klemmbacke ist vorzugsweise der eine Teil der Klemmbacke am Milchsammelstück ausgebildet, während der andere Teil der Klemmbacke ein Teil einer Klemmeinheit bildet, durch welche der Klemmkörper am Milchsammelstück festgelegt ist.

Die arretierbare Ausgestaltung der Verbindung kann sowohl durch Formschluss als auch durch Kraftschluss erreicht werden. Zur Einstellung eines Winkels muss gegebenenfalls eine Mindestkraft überwunden werden, wenn beispielsweise eine entsprechend ausgestaltete formschlüssige Verbindung zwischen dem kugelförmigen Klemmkörper als auch der wenigstens einen Klemmbacke vorhanden ist, die beispielweise durch Rastungen erreicht wird. Diese Ausgestaltung ist nicht nur bei einer Klemmverbindung mit einem kugelförmigen Klemmkörper vorteilhaft. Auch bei anders ausgestalteten Klemmverbindungen ist dies vorteilhaft.

Besonders bevorzugt ist eine Ausgestaltung, bei der der kugelförmige Klemmkörper ein integraler Bestandteil des Milchschlauchs ist.

Nach einer noch weiteren vorteilhaften Ausgestaltung der erfindungsgemäßen Melkeinheit wird vorgeschlagen, dass der kugelförmige Klemmkörper aus einem sich vom Werkstoff des Milchschlauchs unterscheidenden Werkstoff gebildet ist. Insbesondere können der kugelförmige Klemmkörper und der Milchschlauch nach dem Mehrkomponenten-Spritzverfahren, insbesondere nach dem ZweiKomponenten-Spritzverfahren, hergestellt sein.

Der vorzugsweise kugelförmige Klemmkörper weist vorzugsweise einen größeren Durchmesser als der Außendurchmesser des Milchschlauchs auf. Insbesondere wird vorgeschlagen, dass der Klemmkörper einen Durchmesser aufweist, der zwischen dem 1,2 und dem 3-fachem des Außendurchmessers des Milchschlauchs, insbesondere des Außendurchmessers des Milchschlauchs im Bereich des Übergangs zum Klemmkörper, beträgt. Besonders bevorzugt ist dabei ein Durchmesser des Klemmkörpers, der ca. dem 1,4-fachen des Durchmessers des Milchschlauchs entspricht. Der vorzugsweise kugelförmige Klemmkörper ist vorzugsweise so ausgebildet, dass dieser eine Öffnung aufweist, die zum Innenraum des Milchsammelstücks gerichtet ist, durch die der Austritt des Milchschlauchs mit dem Innenraum des Milchsammelstücks verbunden ist. Der Klemmkörper wird durch wenigstens ein Teil der Klemmbacke oder einer Klemmeinheit in die andere Klemmbacke des Milchsammelstücks gepresst, so dass ein dichter Übergang zwischen dem Milchschlauch und dem Sammelstück entsteht. Insbesondere aufgrund der Rotationssymmetrie der Kugel bezüglich der horizontalen Ausrichtung ist eine stufenlose Verstellbarkeit des Milchschlauchs möglich.

Es ist nicht zwingend, dass der Mittelpunkt der kugelförmigen Klemmkörper auf einer Längsachse des Milchschlauchs liegt. Bevorzugt ist eine Ausgestaltung, bei der eine exzentrische Anordnung ausgebildet ist.

Besonders bevorzugt ist eine Ausbildung der Klemmverbindung, bei der der Kugelmittelpunkt bezüglich des Anschlusses am Milchsammelstück von der Längsachse des Milchschlauchs verschoben, insbesondere nach oben hin, d. h. vom Milchsammelstück weg, verschoben ist.

Gemäß einer noch weiteren vorteilhaften Ausbildung der erfindungsgemäßen Melkeinheit wird vorgeschlagen, dass der kugelförmige Klemmkörper und/oder wenigstens eine Klemmbacke Makrostrukturen aufweist bzw. aufweisen, die in entsprechende Ausnehmungen eingreifen, wodurch eine Winkeleinstellung in diskreten Schritten möglich ist. Darüber hinaus können Anschläge vorgesehen sein, wodurch eine Verstellbarkeit des Winkels auf einen definierten Bereich eingeschränkt wird. Unterschiedliche Winkeleinstellungen bzw. Ausrichtungen einzelner oder aller Melkschläuche relativ zum Milchsammelstück können auch dadurch erreicht werden, dass wenigstens eine Klemmbacke als auswechselbare Klemmbacke gebildet ist. Darüber hinaus besteht die Möglichkeit, durch Vertauschen der Klemmbacken die Winkeleinstellung zu verändern. Betrachtet man beispielsweise ein Milchsammelstück mit vier Anschlüssen für Milchschläuche, so kann ein Vertauschen der Klemmbacken untereinander, beispielsweise im Uhrzeigersinn der Anschlussstellen für die Milchschläuche betrachtet, eine geänderte Winkeleinstellung erreicht werden.

Der Klemmkörper weist vorzugsweise einen im Wesentlichen polygonalen, insbesondere einen kreisförmigen Querschnitt, auf.

Nach einer noch weiteren vorteilhaften Ausgestaltung der Melkeinheit wird vorgeschlagen, dass der Milchschlauch wenigstens einen gekrümmt ausgebildeten Abschnitt aufweist. Besonders bevorzugt ist dabei eine Ausgestaltung, bei der der wenigstens eine Abschnitt benachbart zum Milchsammelstück ausgebildet ist.

Zur Vereinfachung der Einstellbarkeit wenigstens zweier Klemmverbindungen wird vorgeschlagen, dass diese eine gemeinsame Klemmeinheit aufweisen.

Nach einer noch weiteren vorteilhaften Ausgestaltung der Melkeinheit wird vorgeschlagen, dass diese wenigstens zwei Milchschläuche aufweist, die gelenkig mit dem Milchsammelstück verbunden sind. Die Längsachsen der Milchschläuche im Bereich der Verbindung zwischen dem Milchschlauch und dem Sammelstück beschreiben einen theoretischen Kegel mit einem Öffnungswinkel. Der Kegel muss nicht im strengen mathematischen Sinne ausgebildet sein. Die Längsachsen zweier benachbarter Milchschläuche schließen einen Winkel ein, der kleiner als ein Öffnungswinkel des Kegels ist. Die gelenkige Verbindung ist vorzugsweise arretierbar.

Nach einem noch weiteren erfinderischen Gedanken wird ein Melkbecher umfassend eine Melkbecherhülse, in der ein Zitzengummi angeordnet ist, und einen mit dem Zitzengummi verbundenen Milchschlauch vorgeschlagen, wobei die Verbindung zwischen dem Zitzengummi und dem Milchschlauch durch ein eine lösbare Klemmverbindung gebildet ist, wobei die Klemmverbindung wenigstens zwei Klemmbacken umfasst, zwischen denen ein am Endbereich des Milchschlauchs ausgebildeter Klemmkörper positionierbar ist. Die Ausbildung des Milchschlauchs kann entsprechend der Ausgestaltungen nach den Ansprüchen 1 bis 10 erfolgen.

Nach einem noch weiteren erfinderischen Gedanken wird ein Melkzeug umfassend ein Milchsammelstück, wenigstens zwei Melkbecher, die jeweils eine Melkbecherhülse und ein in der Melkbecherhülse angeordnetes Zitzengummi aufweisen, und Milchschläuche, die die Melkbecher mit dem Milchsammelstück verbinden, vorgeschlagen, wobei wenigstens eine erste Klemmverbindung zwischen einem Milchschlauch und dem Milchsammelstück und eine zweite Klemmverbindung zwischen einem Milchschlauch und dem Milchsammelstück vorgesehen sind, wobei wenigstens ein Milchschlauch nach einem der Ansprüche 1 bis 10 ausgebildet ist.

Durch die vorliegende Erfindung werden die auf den Zitzenansatz wirkenden Scherkräfte zumindest reduziert, wenn nicht sogar vollständig vermieden. Durch die vorliegende Erfindung wird die Möglichkeit geschaffen, für jede Kuh eine individuelle Einstellung vorzunehmen. Möchte der Landwirt das Melkzeug nicht für jede einzelne Kuh einstellen, so kann er alternativ zumindest eine tiergruppenindividuelle Einstellung realisieren. Darüber hinaus wird durch die Erfindung die Austauschbarkeit der einzelnen Bauteile eines Melkzeugs erreicht. Insbesondere dadurch, dass wenigstens eine Klemmbacke austauschbar ist, wird eine erhebliche Kostenreduktion bei der Herstellung der Melkeinheit erreicht. Einzelne Klemmbacken können beispielsweise durch Austausch ersetzt werden, wobei die neu verwendeten Klemmbacken andere Winkeleinstellungen erlauben. Darüber hinaus besteht die Möglichkeit, wie bereits vorstehend ausgeführt, dass durch Austausch der Backen untereinander eine Winkeleinstellung verändert werden kann.

Weitere Einzelheiten und Vorteile der Erfindung werden anhand der in der Zeichnung dargestellten Ausführungsbeispiele erläutert, ohne dass der Gegenstand der Erfindung auf diese konkreten Ausführungsbeispiele beschränkt wird.

Es zeigen:
- Fig. 1:: in einer perspektivischen Ansicht ein Melkzeug,
- Fig. 2:: im Schnitt ein Ausführungsbeispiel einer Klemmverbindung,
- Fig. 3:: im Schnitt die Ausgestaltung einer Klemmverbindung mit einer Klemmeinheit,
- Fig. 4:: schematisch die Verschwenkbarkeit von Milchschläuchen in einer Ebene,
- Fig. 5:: perspektivisch ein erstes Ausführungsbeispiel eines Milchschlauchs mit einem kugelförmigen Klemmkörper,
- Fig. 6:: den Milchschlauch nach Fig. 5 in einer Vorderansicht,
- Fig. 7:: den Milchschlauch nach Fig. 6 im Schnitt,
- Fig. 8:: ein zweites Ausführungsbeispiel eines Milchschlauchs in einer perspektivischen Ansicht,
- Fig. 9:: den Milchschlauch nach Fig. 8 in einer Vorderansicht,
- Fig. 10:: den Milchschlauch nach Fig. 9 im Schnitt,
- Fig. 11:: ein drittes Ausführungsbeispiel eines Milchschlauchs im Schnitt,
- Fig. 12:: den Milchschlauch nach Fig. 11 mit einer Klemmeinheit,
- Fig. 13:: ein weiteres Ausführungsbeispiel einer Klemmverbindung zwischen einem Milchschlauch und einem Milchsammelstück,
- Fig. 14:: die Klemmverbindung nach Fig. 13 mit einer Klemmkraft F_{P},
- Fig. 15:: in einer perspektivischen Ansicht ein Milchsammelstück mit Milchschläuchen,
- Fig. 16:: ein Ausführungsbeispiel des Milchschlauchs nach Fig. 15,
- Fig. 17:: eine Klemmeinheit in einer Draufsicht,
- Fig. 18:: die Klemmeinheit nach Fig. 17 in einer perspektivischen Ansicht,
- Fig. 19:: das Milchsammelstück mit Milchschläuchen in einer Schnittansicht,
- Fig. 20:: das Milchsammelstück mit Milchschläuchen nach Fig. 19 schematisch in einer Draufsicht,
- Fig. 21:: ein weiteres Ausführungsbeispiel eines Milchschlauchs in einer Schnittansicht,
- Fig. 22:: den Milchschlauch mit einer Klemmeinheit in einer perspektivischen Ansicht,
- Fig. 23:: den Milchschlauch nach Fig. 22 im Schnitt,
- Fig. 24:: eine Klemmbacke in einer Draufsicht,
- Fig. 25:: die Klemmbacke nach Fig. 24 in einer perspektivischen Ansicht von unten
- Fig. 26:: die Klemmbacke nach Fig. 24 in einer perspektivischen Ansicht von unten,
- Fig. 27:: einen Tragkörper,
- Fig. 28:: in einer perspektivischen Ansicht ein weiteres Ausführungsbeispiel eines Milchschlauchs,
- Fig. 29:: den Milchschlauch nach Figur 28 in einer Seitenansicht,
- Fig. 30:: den Milchschlauch nach Figur 28 im Schnitt,
- Fig. 31:: in einer perspektivischen Ansicht eine weitere Ausführungsform eines Milchschlauchs,
- Fig. 32:: den Milchschlauch nach Figur 31 in einer Seitenansicht und
- Fig. 33:: eine Schnittansicht des Milchschlauchs nach Figur 31.

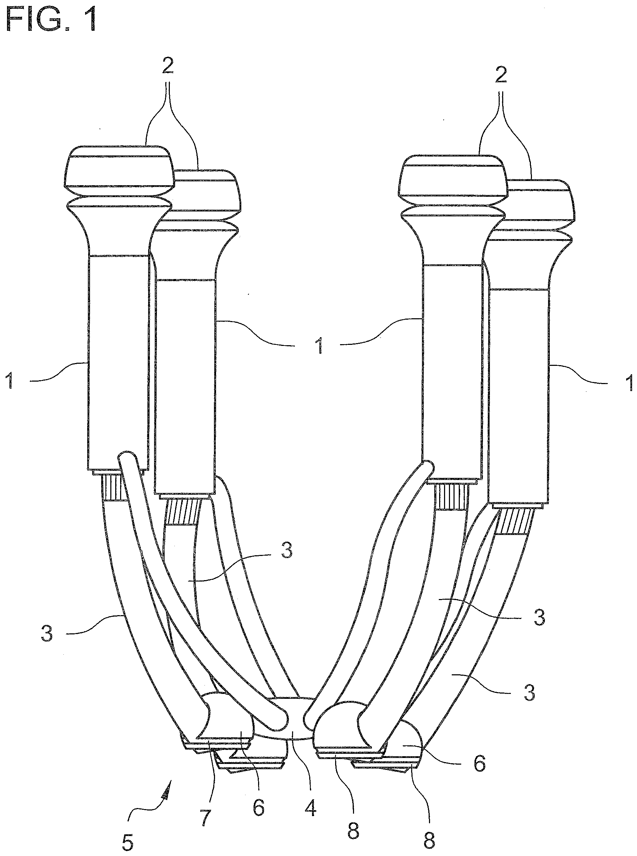

Fig. 1 zeigt ein Ausführungsbeispiel eines Melkzeugs zum Melken von Kühen. Das Melkzeug umfasst Melkbecher 1, die Zitzengummis 2 aufweisen. Mit den Melkbechern sind Milchschläuche 3 verbunden. Die gegenüberliegenden Enden der Milchschläuche 3 sind mit einem nicht dargestellten Milchsammelstück relativ zum Milchsammelstück einstellbar verbunden. In dem dargestellten Ausführungsbeispiel nach Fig. 1 handelt es sich bei der Verbindung der Milchschläuche 3 mit dem Milchsammelstück um eine Klemmverbindung.

Es besteht die Möglichkeit, dass nicht sämtliche Milchschläuche mittels Klemmverbindungen mit dem Milchsammelstück verbunden sind. Es besteht die Möglichkeit, dass für die Verbindung zwischen den Milchschläuchen und dem Milchsammelstück unterschiedliche Klemmverbindungen vorgesehen werden. Darüber hinaus besteht die Möglichkeit, dass lediglich eine vorbestimmte Anzahl der Milchschläuche mit dem Milchsammelstück gelenkig verbunden sind. So können beispielsweise zwei Milchschläuche gelenkig mit dem Milchsammelstück verbunden sein, während die beiden anderen Milchschläuche starr mit dem Milchsammelstück verbunden sind.

Darüber hinaus können die Klemmverbindungen zwischen den Milchschläuchen und dem Milchsammelstück so ausgebildet sein, dass die Verschwenkbarkeit einzelner oder mehrerer Milchschläuche relativ zueinander unterschiedlich ausgestaltet wird.

In dem in der Fig. 1 dargestellten Ausführungsbeispiel sind die Milchschläuche 3 über jeweils eine Klemmverbindung ausgebildet. Die Klemmverbindung 5 weist eine erste Klemmbacke 6 und eine zweite Klemmbacke 8 auf. Die zweite Klemmbacke 8 ist am nicht dargestellten Milchsammelstück ausgebildet. In die Klemmbacke 8 greift ein entsprechend ausgeformter kugelförmiger Klemmkörper 7 ein. Zum Arretieren des Gelenkes ist eine Klemmeinheit 4 vorgesehen. Die ersten Klemmbacken 6 sind mit der Klemmeinheit 4 verbunden. Es besteht die Möglichkeit, dass für eine jede Klemmverbindung zwischen einem Milchschlauch 3 und dem Milchsammelstück eine gesonderte Klemmeinheit 4 vorgesehen ist. Es besteht jedoch auch die Möglichkeit, dass einige oder alle Klemmverbindungen mittels einer gemeinsamen Klemmeinheit arretiert werden.

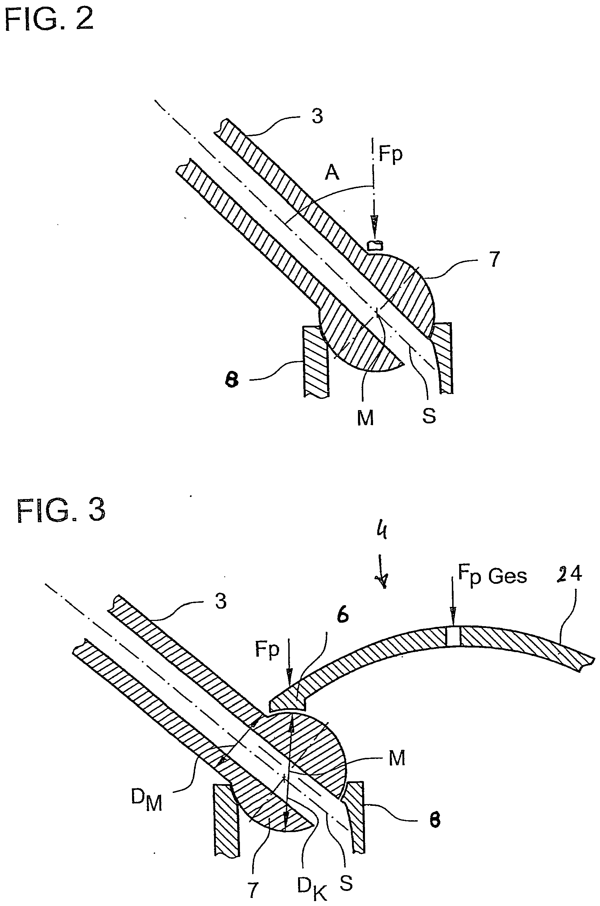

In der Fig. 2 ist eine Klemmverbindung zwischen einem Milchschlauch 3 und einem Milchsammelstück im Schnitt und schematisch dargestellt. Die Verbindung weist eine Klemmbacke 8 auf, in welcher der kugelförmige Klemmkörper 7 angeordnet ist. Ein kugelförmiger Klemmkörper im Sinne der Erfindung kann auch durch eine Kugel oder ein kugelförmiges Element gebildet sein, welches fluidtechnisch mit dem Milchschlauch verbunden ist. Der kugelförmige Klemmkörper kann ein gesondertes Bauteil sein, welches mit dem Milchschlauch form- und/oder kraftschlüssig verbunden ist. Bevorzugt ist jedoch eine Ausgestaltung, bei der der kugelförmige Klemmkörper ein integraler Bestandteil des Milchschlauchs 3 ist, wie dies aus der Fig. 2 bzw. Fig. 3 ersichtlich ist.

Mittels der Klemmverbindung kann der Winkel A in einer vertikalen Ebene eingestellt werden. Im Hinblick darauf, dass die Klemmverbindung über drei Freiheitsgrade verfügt, wird die Möglichkeit geschaffen, eine genaue Ausrichtung des Milchschlauchs und somit auch des Melkbechers zu erreichen.

Zur Arretierung und zur fluiddichten Verbindung zwischen dem Milchschlauch 3 und dem in der Fig. 2 nicht dargestellten Milchsammelstück wird auf den kugelförmigen Klemmkörper 7 eine Kraft F_{P} ausgeübt.

Aus der Darstellung nach Fig. 2 ist ersichtlich, dass der Durchmesser des kugelförmigen Klemmkörpers 7 größer ist als der Außendurchmesser des Milchschlauchs. Vorzugsweise entspricht der Durchmesser des kugelförmigen Klemmkörpers etwa dem 1,2 bis 3-fachen des Außendurchmessers des Milchschlauchs. Als besonders vorteilhaft hat sich herausgestellt, dass der Durchmesser des kugelförmigen Klemmkörpers vorzugsweise etwa dem 1,4-fachen des Außendurchmessers des Milchschlauchs entspricht. Besteht der Klemmkörper aus einem Thermoplast, so kann der Durchmesser des Klemmkörpers auch kleiner als der Durchmesser des Milchschlauchs gewählt werden.

Mit dem Bezugszeichen S ist die Längsachse des Milchschlauchs 3 bezeichnet. Das Bezugszeichen M kennzeichnet den Mittelpunkt des kugelförmigen Klemmkörpers 7. In der in der Fig. 2 dargestellten Ausführungsform liegt der Mittelpunkt M des kugelförmigen Klemmkörpers 7 auf der Längsachse S, so dass der Milchschlauch zumindest im Bereich der Klemmverbindung im Wesentlichen rotationssymmetrisch ausgebildet ist.

Fig. 3 zeigt ein weiteres Ausführungsbeispiel einer Klemmverbindung zwischen einem Milchschlauch 3 und einem nicht dargestellten Milchsammelstück. Das Milchsammelstück weist eine zweite Klemmbacke 8 auf, in die ein kugelförmiger Klemmkörper 7 eingreift. Der kugelförmige Klemmkörper 7 ist mit dem Milchschlauch 3 verbunden. Aus der Darstellung nach Fig. 3 ist ersichtlich, dass der Mittelpunkt M des kugelförmigen Klemmkörpers nicht auf der Längsachse S des Milchschlauchs 3 liegt. Dieser ist nach oben hin, d. h. von dem nicht dargestellten Milchsammelstück weg, verschoben. Die Ausgestaltung der Klemmbacke ist vorzugsweise so, dass diese eine möglichst große Öffnung aufweist, und eine möglichst definierte kleine Dichtfläche vorhanden ist.

Die Klemmbacke 8 und der kugelförmige Klemmkörper sind vorzugsweise strömungstechnisch so ausgebildet, dass der Strömungswiderstand möglichst gering ist. Die Klemmbacke kann entsprechende Leitflächen aufweisen, durch welche die strömende Milch vom Milchschlauch in das Milchsammelstück eine bevorzugte Strömungsrichtung erfährt.

Der kugelförmige Klemmkörper und/oder die Klemmbacke kann mit Mikro- und/oder Makrostrukturen versehen werden bzw. sein, durch welche die kugelförmigen Klemmkörper und die Klemmbacke relativ zueinander in diskreten Schritten verschwenkt werden können. Die Mikro- und/oder Makrostrukturen können durch entsprechende Vorsprünge und Ausnehmungen gebildet sein.

Aus der Fig. 3 ist ersichtlich, dass die Klemmverbindung mittels einer Klemmeinheit arretiert werden kann. Die Klemmeinheit 4 weist in dem dargestellten Ausführungsbeispiel einen Tragkörper 24 auf, der mit entsprechenden Klemmbacken 6 versehen ist, was nicht zwingend, jedoch vorteilhaft, ist. Hierbei wird über die Klemmeinheit 4 eine Kraft auf den kugelförmigen Klemmkörper 7 ausgeübt, durch welche eine fluiddichte Verbindung zwischen dem kugelförmigen Klemmkörper 7 und der Klemmbacke 8 am Milchsammelstück entsteht. Die Klemmbacken 8 können verschwenkbar, vorzugsweise verdrehbar mit dem Tragkörper 24 verbunden sein, so dass die Klemmbacken unterschiedliche Positionen einnehmen können und zwar unabhängig von der Stellung des Tragkörpers 24. Hierdurch können auch etwaige fertigungsbedingte Toleranzen ausgeglichen werden.

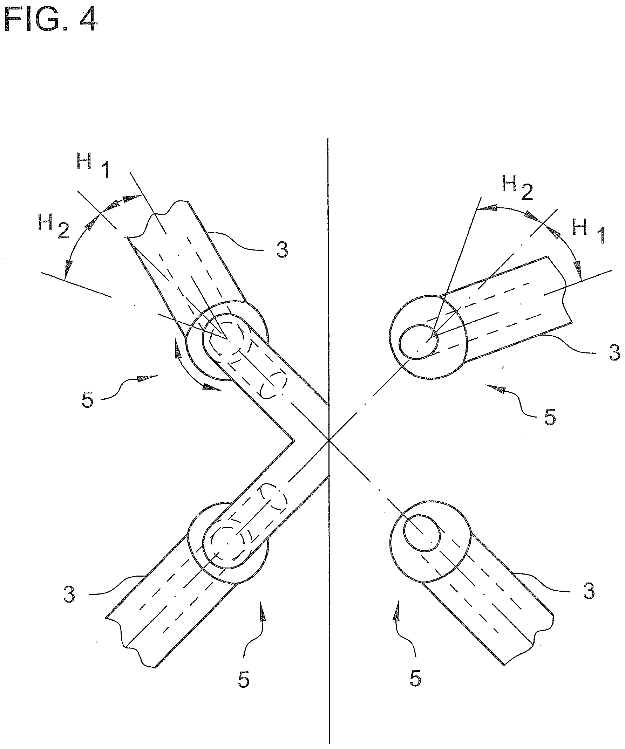

Durch Lösen der Klemmeinheit 4 können einzelne oder alle Verbindungen freigegeben werden, so dass eine Einstellbarkeit einzelner oder aller Milchschläuche zueinander und bezüglich des Milchsammelstücks erreicht wird. Fig. 4 zeigt in einer Draufsicht Milchschläuche 3, die unterschiedlich zueinander ausgerichtet sind, so dass eine optimale Einstellung für die zu melkenden Tiere erreicht wird. Mit den Bezugszeichen H1 und H2 sind Winkel bezeichnet, um die die einzelnen Milchschläuche ausgelenkt werden können.

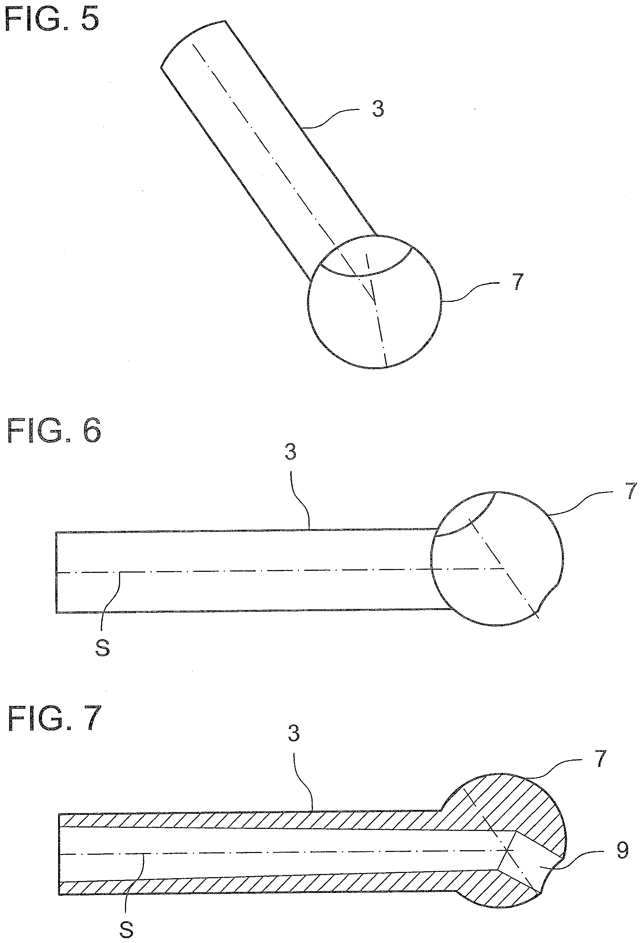

Fig. 5 bis 7 zeigen eine Ausführungsform eines Milchschlauchs 3. Der Milchschlauch 3 weist an seinem einen Ende einen kugelförmigen Klemmkörper 7 auf. Der Mittelpunkt des kugelförmigen Klemmkörpers 7 liegt nicht auf der Längsachse S des Milchschlauchs, so dass hierdurch eine größere Überdeckung durch eine Klemmeinheit erreicht wird, welche die Dichtkraft in den kugelförmigen Klemmkörper 7 einleitet. Aus der Darstellung nach Fig. 7 ist darüber hinaus ersichtlich, dass die Mündung 9 in dem kugelförmigen Klemmkörper 7 gegenüber der Längsachse S geneigt ist. Hierdurch kann erreicht werden, dass der Durchmesser des kugelförmigen Klemmkörpers reduziert werden kann, wobei eine hinreichend große Überdeckung mit der Klemmbacke 8 erreicht werden kann.

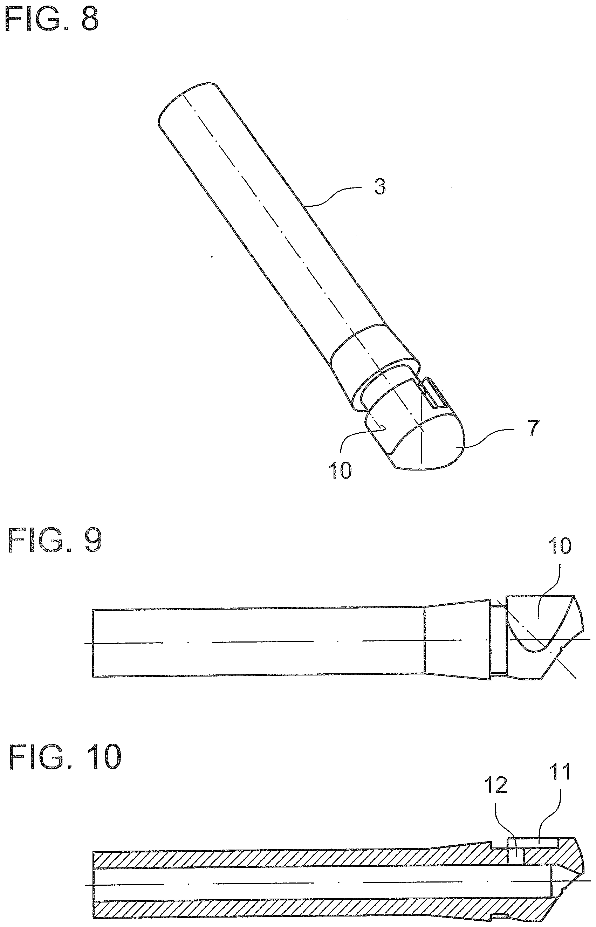

In den Fig. 8 bis 10 ist ein noch weiteres Ausführungsbeispiel eines Milchschlauchs dargestellt. Der Milchschlauch 3 weist einen kugelförmigen Klemmkörper 7 auf. Der kugelförmige Klemmkörper 7 weist einen Bereich 10 auf, der im Wesentlichen zylinderförmig ausgebildet ist. Innerhalb des Bereichs 10 ist eine Nut 11 vorgesehen. Durch die Nut 11 wird eine bessere Entformbarkeit zumindest des kugelförmigen Klemmkörpers 7 erreicht. Darüber hinaus ist eine Ausnehmung 12 vorgesehen, in die ein entsprechend komplementäres Teil eingeführt werden kann, wodurch der Milchschlauch am Milchsammelstück in einer definierten Position festgelegt werden kann.

In die Nut 11 kann auch ein entsprechender Vorsprung, der an der Klemmbacke 8 ausgebildet ist, eingreifen. Greif der Vorsprung in die Nut ein, so kann der Milchschlauch eine vorgegebene definierte Lage einnehmen. Ist die Klemmbacke verschwenkbar, vorzugsweise verdrehbar, so wird die Klemmbacke gemeinsam mit dem Milchschlauch über den Klemmkörper positioniert. Hierdurch wird sichergestellt, dass sich die Austrittsöffnung stets in einer zulässigen Position befindet.

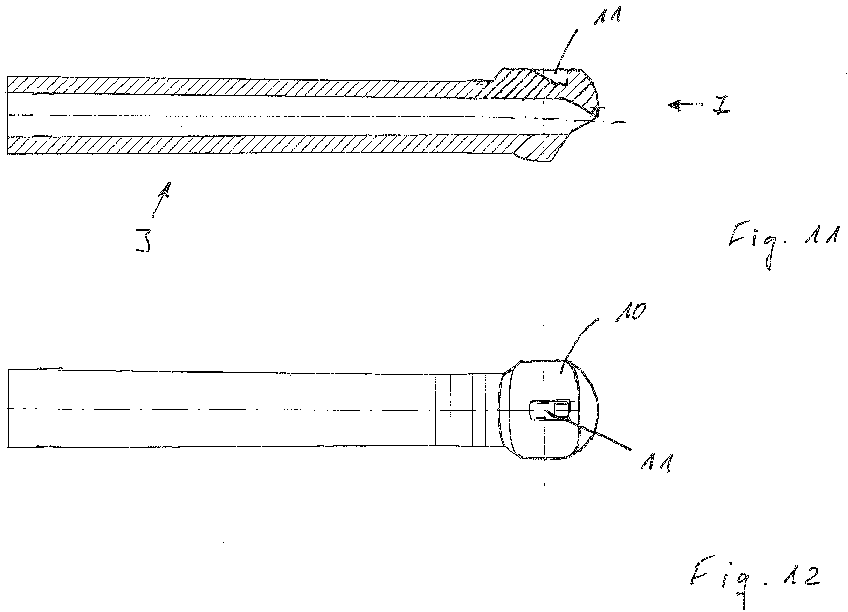

In den Fig. 11 und 12 ist ein weiteres Ausführungsbeispiel eines erfindungsgemäßen Milchschlauchs dargestellt. Der Milchschlauch 3 weist einen im Wesentlichen kugelförmigen Klemmkörper 7 auf. Der Klemmkörper 7 weist einen Bereich 10 auf. Der Bereich 10 bildet eine Mantelfläche, die im Wesentlichen ellipsenförmig ausgebildet ist. Der Mittelpunkt des kugelförmigen Klemmkörpers 7 ist im Hinblick auf die Darstellung in der Fig. 11 nach oben hin beabstandet von der Längsachse des Milchschlauchs. Dies führt zu einer deutlich besseren Überdeckung der Kugel von oben bei gleichem Kugeldurchmesser. Dies ist insbesondere erwünscht und vorteilhaft für einen möglichst großen Bewegungsspielraum im Bereich der Dichtfläche. So wird eine zentrale Krafteinleitung in Richtung der Symmetrieachse der Klemmbacke am Milchsammelstück, die als zweite Dichtfläche dient, in vielen Positionen gewährleistet. Die Ellipsenform bietet den Vorteil, dass der Klemmkörper seitlich schmaler wird, was besser für die Abmessung in der Klemmeinheit ist.

Gleichzeitig ist durch den nach oben gerichteten größeren Radius der Ellipse der Stützrand des Klemmkörpers im Bereich der stärksten Belastung, die dann eintritt, wenn ein Zitzenbecher mit dem Milchschlauch verbunden ist und herunterhängt, im Eingriffsbereich der Klemmbacke 8 der Klemmeinheit größer als bei einem einfachen zylindrischen Bereich 10. So wird die Gefahr vom Herausrutschen des Klemmkörpers aus der Klemmbacke unter Belastung minimiert. Der Milchschlauch kann mit einem Zitzengummi einstückig ausgebildet sein.

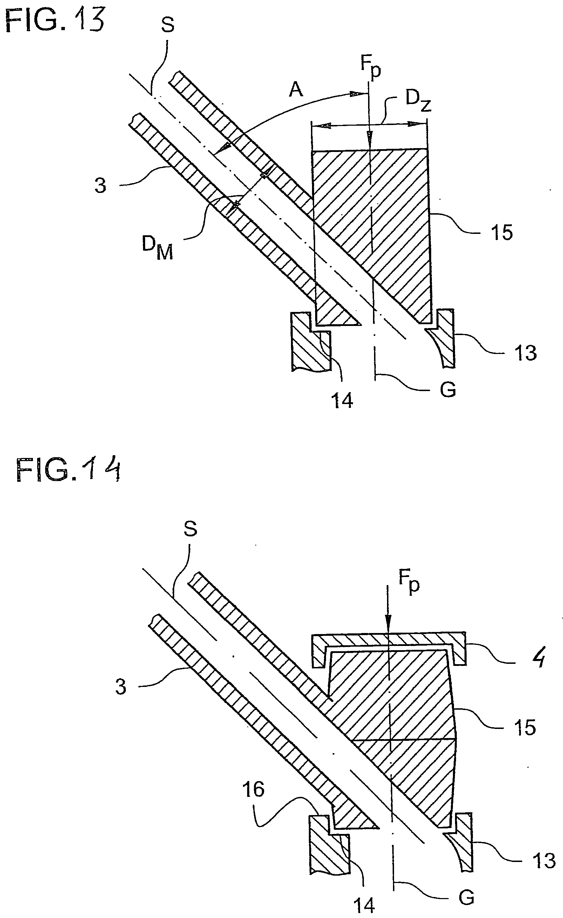

In den Fig. 13 und 14 ist ein weiteres Ausführungsbeispiel einer Klemmverbindung zwischen einem Milchschlauch 3 und einem Milchsammelstück dargestellt. Mit dem Milchsammelstück ist ein Anschluss 13 versehen, der einen Dichtsitz 14 aufweist. Der Milchschlauch 3 weist einen Klemmkörper 15 auf, welcher im Wesentlichen zylinderförmig ausgebildet ist. Die Längsachse des Klemmkörpers 15 verläuft im Wesentlichen koaxial zu der Gelenkachse G. Der Dichtsitz 14 weist eine an den Klemmkörper 15 angepasste Geometrie auf. Aus der Darstellung nach Fig. 13 bzw. 14 ist ersichtlich, dass die Längsachse S des Milchschlauchs 3 die Gelenkachse G unter einem Winkel A schneidet. Durch Verschwenken des Milchschlauchs 3 um die Gelenkachse G kann die Position des Melkbechers verändert werden.

Der Klemmkörper 15 ist vorzugsweise zumindest teilelastisch ausgebildet. Durch Aufbringung einer Klemmkraft F_{P} auf eine Klemmeinheit 4 wird zum einen der Klemmkörper 15 in einer vorgegebenen Stellung arretiert und zum anderen eine fluiddichte Verbindung zwischen dem Klemmkörper und dem Anschluss 13 hergestellt. Der Anschluss 13 weist vorzugsweise einen umlaufenden Kragen 16 auf, gegen den ein Teil der Mantelfläche des Klemmkörpers 15 zur Anlage kommen kann, wenn dieser mit der Klemmkraft F_{P} beaufschlagt wird, wodurch die fluiddichte Verbindung zwischen dem Klemmkörper 15 und dem Anschluss 13 noch weiter verbessert werden kann. Der Klemmkörper 15 kann lösbar mit dem Milchschlauch verbunden sein. Bevorzugt ist eine Ausgestaltung, bei der der Klemmkörper und der Milchschlauch einstückig ausgebildet sind. Hierbei kann der Klemmkörper aus einem anderen Werkstoff gebildet sein als der Milchschlauch.

Die zylinderförmige Ausgestaltung des Klemmkörpers 15 stellt eine bevorzugte Ausführungsform des Klemmkörpers dar. Dies ist nicht zwingend notwendig. Der Klemmkörper kann auch einen polygonalen Querschnitt aufweisen. Gegebenenfalls weist der Anschluss 13 eine zum polygonalen Querschnitt angepasste Form auf, so dass eine Verstellbarkeit des Milchschlauchs bzw. eine Verschwenkbarkeit des Klemmkörpers 15 um die Gelenkachse G in vorgegebenen Winkelschritten erfolgen kann. Die Winkelschritte können alle gleich oder unterschiedlich sein.

Der Milchschlauch weist in einer noch weiteren Ausführungsform einen im Wesentlichen scheibenförmig ausgebildeten Klemmkörper auf. Zur Begrenzung des Verschwenkwinkels um die Gelenkachse G ist ein Anschlag vorgehen, der zwischen zwei am Milchsammelstück ausgebildeten, nicht dargestellten, Anschlägen verschwenkbar ist. Zur Festlegung des Milchschlauchs kann eine nicht dargestellte Klemmeinheit vorgesehen sein, die im Wesentlichen ringförmig ausgebildet ist, so dass diese Klemmeinheit eine Klemmkraft auf den Klemmkörper ausübt. Innerhalb der ringförmig ausgebildeten Klemmeinheit können entsprechende Aussparungen vorgesehen sein, durch welche sich der Anschlag hindurch erstreckt. Hierdurch kann eine Winkeleinstellung in diskreten Schritten vorgenommen werden. Die Aussparungen in der im Wesentlichen ringförmig ausgebildeten Klemmeinheit können durch Ausstanzungen hergestellt sein.

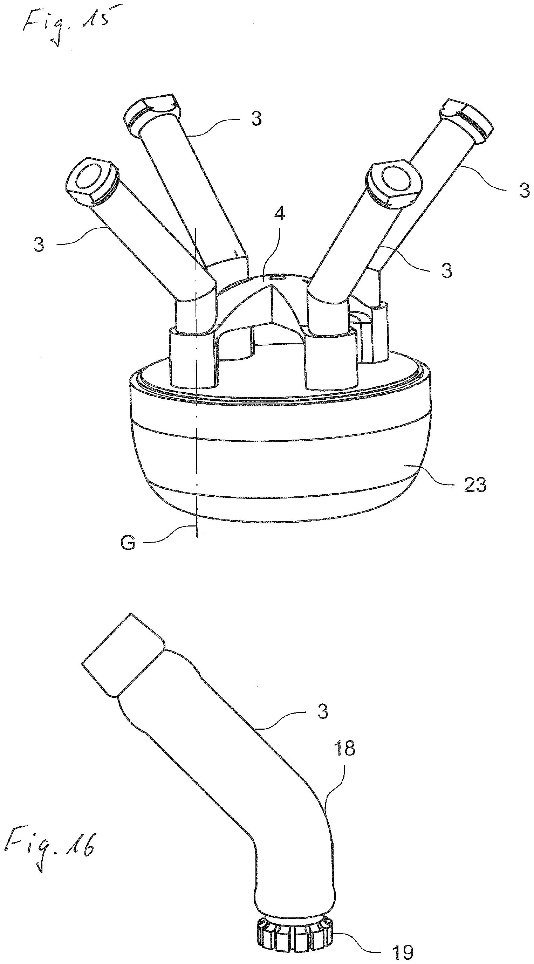

Fig. 15 zeigt ein Ausführungsbeispiel eines Milchsammelstücks 23 in Verbindung mit Milchschläuchen 3. Die Milchschläuche 3 sind über eine gemeinsame Klemmeinheit 4 am Milchsammelstück 23 festgelegt. Die Milchschläuche 3 sind um entsprechende Gelenkachsen G verschwenkbar.

Insbesondere aus der Fig. 16 ist ersichtlich, dass der Milchschlauch 3 einen gekrümmten Abschnitt 18 aufweist. Der dem gekrümmten Abschnitt 18 benachbarte Endbereich des Milchschlauchs 3 weist einen Klemmkörper 19 auf, der zur Anlage an das Milchsammelstück - mittelbar oder unmittelbar - gebracht wird. Der Klemmkörper 19 wirkt mit der Klemmeinheit 4 zusammen, so dass eine fluiddichte Verbindung zwischen dem Milchschlauch 3 und dem Milchsammelstück 23 hergestellt wird, wenn eine ausreichende Klemmkraft über die Klemmeinheit 4 auf den Klemmkörper 19 aufgebracht wird.

Der Klemmkörper 19 kann wenigstens einen radial auswärts gerichteten Vorsprung aufweisen, der in eine entsprechende Aussparung in der Klemmeinheit hineinragt, wobei die Erstreckung der Aussparung in Umfangsrichtung betrachtet größer ist als die Breite des Vorsprungs, so dass eine Verschwenkbarkeit des Milchschlauchs innerhalb eines bestimmten Winkelbereichs begrenzt wird.

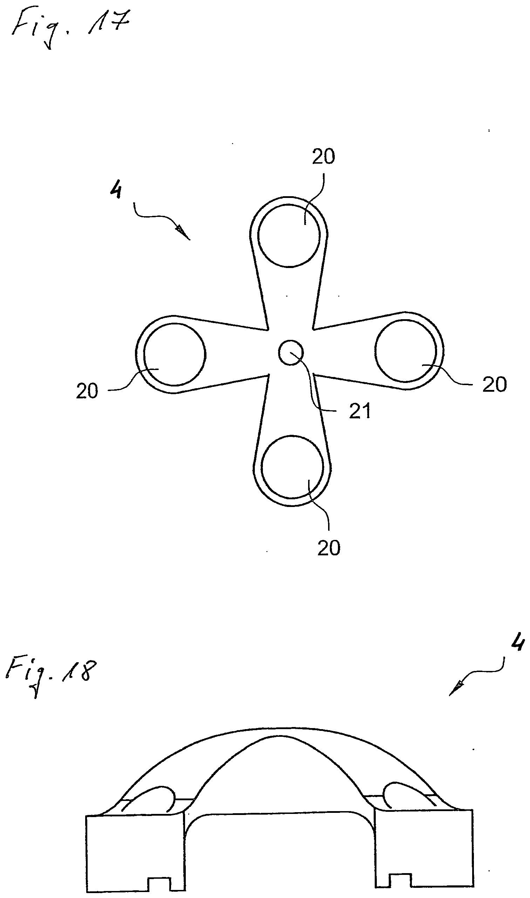

Fig. 17 und 18 zeigen eine Ausführungsform einer Klemmeinheit 4. Die Klemmeinheit 4 weist Durchgänge 20 auf. Durch einen Durchgang 20 erstreckt sich ein Milchschlauch 3. Aus der Darstellung nach Fig. 17 ist ersichtlich, dass im Zentrum der Klemmeinheit 4 eine Durchgangsbohrung 21 vorgesehen ist, durch die ein nicht dargestelltes Verbindungsmittel mit dem Milchsammelstück verbunden werden kann.

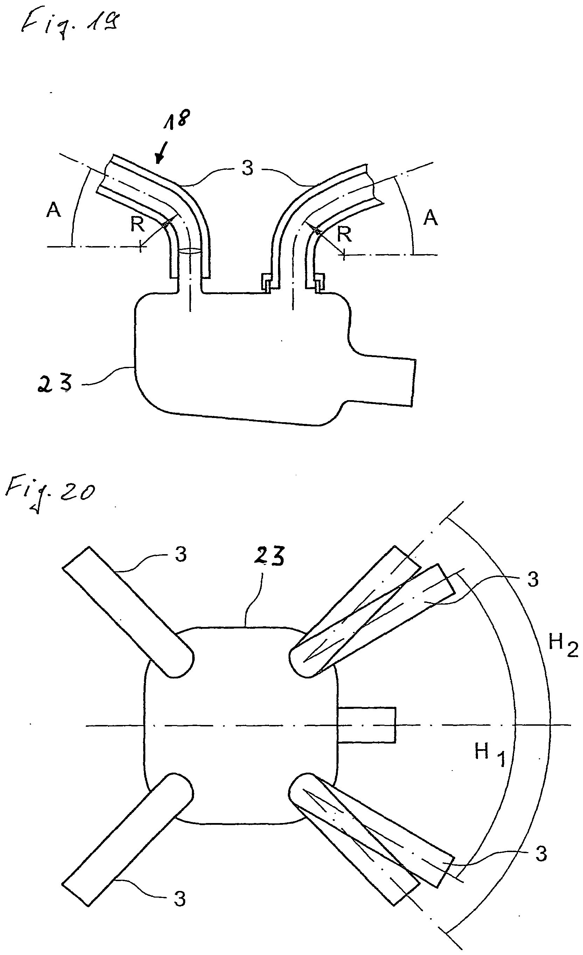

Die Verschwenkbarkeit der Milchschläuche 3 ist in der Fig. 19 bzw. 20 dargestellt. Die Milchschläuche können einzeln entsprechend ausgerichtet werden.

Durch die Ausgestaltung der Klemmeinheit können auch in einem Arbeitsgang mehrere Milchschläuche entsprechend ausgerichtet werden.

Der gekrümmte Abschnitt 18 des Milchschlauchs 3 weist einen Krümmungsradius R auf. Es können unterschiedliche Krümmungsradien R vorgesehen sein. So kann beispielsweise ein Paar Milchschläuche, welche für das Melken der vorderen Zitze einen von den Milchschläuchen, Melkbecher für die die hinteren Zitzen verbinden, verschiedene Krümmungsradien aufweisen.

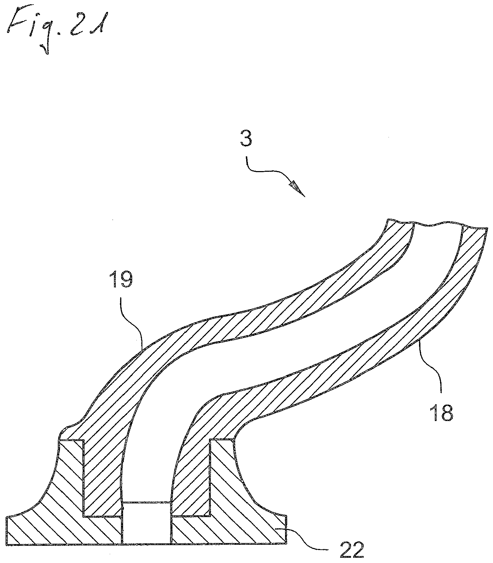

Zu einer noch weiteren Verbesserung der Einstellbarkeit kann der Milchschlauch 3 auch mehrere gekrümmte Abschnitte aufweisen, wie dies aus der Fig. 21 ersichtlich ist.

In der Fig. 21 ist des Weiteren dargestellt, dass ein Endabschnitt des Milchschlauchs 3 mit einem Adapter 22 ausgestattet ist, welcher einen Klemmkörper bildet.

Durch die Erfindung werden im Wesentlichen keine Kräfte bzw. Momente durch die Melkbecher in die Zitzen bzw. in den Euterboden eingeleitet. Hierdurch wird das Melkverhalten der Tiere positiv beeinflusst.

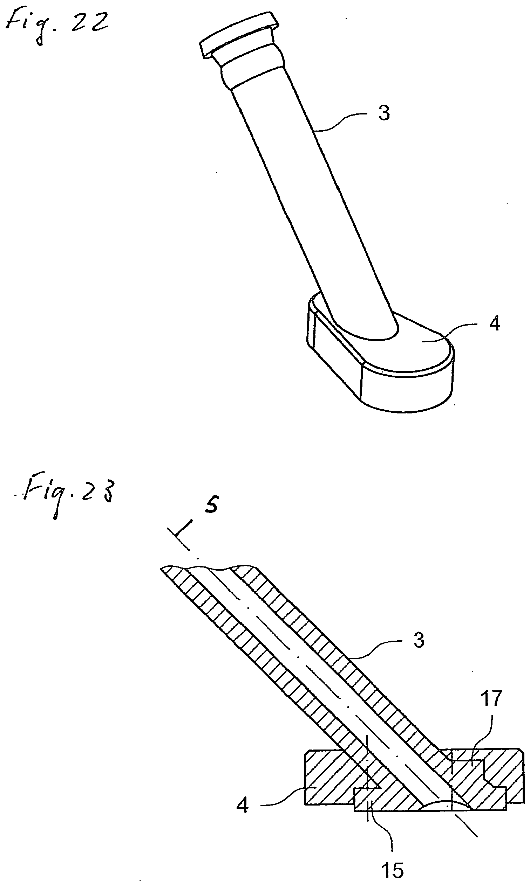

Eine noch weitere Ausgestaltung einer Klemmverbindung ist in den Figuren 22 und 23 dargestellt. Der Milchschlauch 3 weist einen asymmetrisch ausgebildeten Klemmkörper 15 auf. Die Klemmbacke umgreift den Klemmkörper 15.

Wenigstens ein Milchschlauch ist aus einem elastischen Material gebildet. Hierbei kann es sich beispielsweise um Silikon (LSR oder HTV), Gummi oder TPE handeln. Der Milchschlauch kann mit einem Zitzengummi einstückig, vorzugsweise einteilig ausgebildet sein.

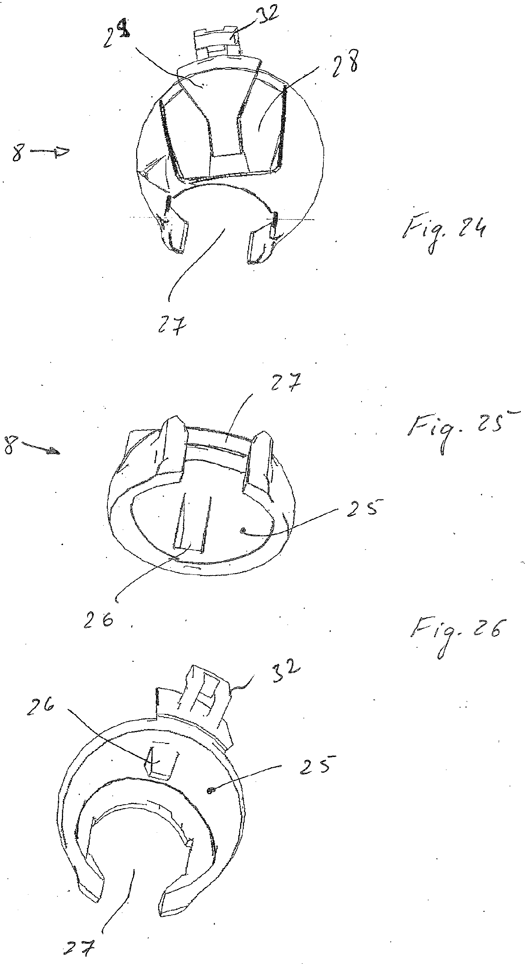

In den Figuren 24 bis 26 ist ein Ausführungsbeispiel einer Klemmbacke 8 dargestellt. Die Klemmbacke 8 weist einen Aufnahmeraum 25 auf, der zur Aufnahme wenigstens eines Teils eines Klemmkörpers dient. Der Aufnahmeraum hat eine Form, die an die Form des Klemmkörpers angepasst ist. Aus der Darstellung in den Figuren 25 und 26 ist ersichtlich, dass die Klemmbacke 8 einen Vorsprung 26 aufweist, der in eine entsprechende Ausnehmung, die beispielsweise in Form einer Nut 11 ausgebildet sein kann, im montierten Zustand eingreift. Der Vorsprung 26 ist in dem dargestellten Ausführungsbeispiel im Wesentlichen keilförmig ausgebildet.

Die Klemmbacke 8 weist eine Durchbrechung 27 auf. Die Durchbrechung 27 ist so ausgebildet, dass diese an die Außenkontur eines Milchschlauchs angepasst ist. Im montierten Zustand erstreckt sich ein Milchschlauch durch die Durchbrechung 27. Die Form und die Gestalt der Durchbrechung 27 beeinflusst die Lage des Milchschlauchs relativ zum Milchsammelstück. In dem dargestellten Ausführungsbeispiel ist die Durchbrechung 27 im Wesentlichen C-förmig ausgebildet. Der Milchschlauch kann durch die offene Seite der C-förmigen Durchbrechung 27 durchgeführt werden, so dass der Klemmkörper in den Aufnahmeraum 25 der Klemmbacke 8 eingreifen kann. Hierdurch wird die Montage der Klemmbacke 8 mit dem Milchschlauch, der einen Klemmkörper aufweist, vereinfacht.

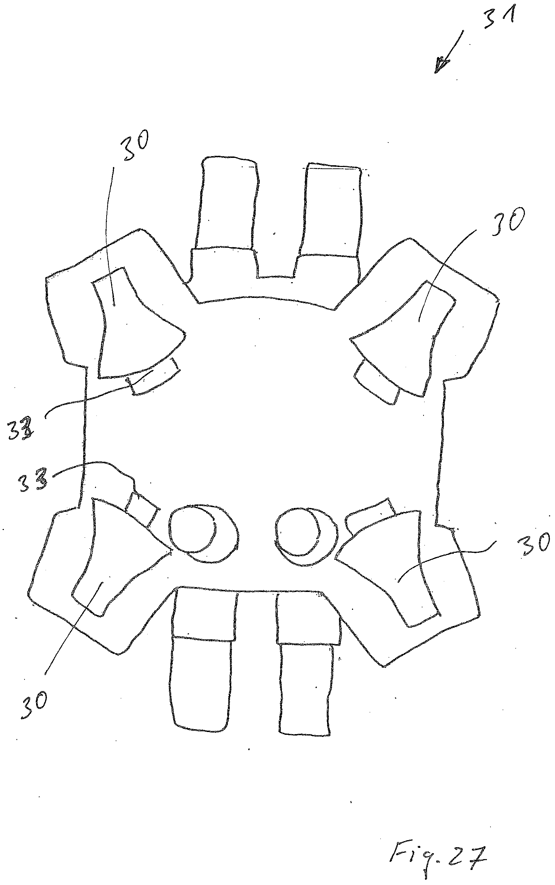

Die Klemmbacke 8 ist mittels einer lösbaren Rastverbindung mit einem Tragkörper verbindbar. Die Klemmbacke 8 weist auf ihrer Oberseite eine Vertiefung 28 auf, die ein Verbindungselement 29 begrenzt. Das Verbindungselement 29 greift in eine entsprechende Aufnahme eines Tragkörpers ein. Die Aufnahme ist in der Figur 27, die den Tragkörper 29 darstellt, mit dem Bezugszeichen 30 bezeichnet. Aus der Darstellung in den Figuren 24 und 26 ist ersichtlich, dass ein Rastelement 32 vorgesehen ist, welches mit einem entsprechend ausgebildeten Rastmittel 33 (siehe Figur 27) des Tragkörpers 31 zusammen wirkt. Die Rastverbindung ist lösbar ausgestaltet, so dass der Tragkörper 31 mit unterschiedlich ausgebildeten Klemmbacken 8 versehen sein kann.

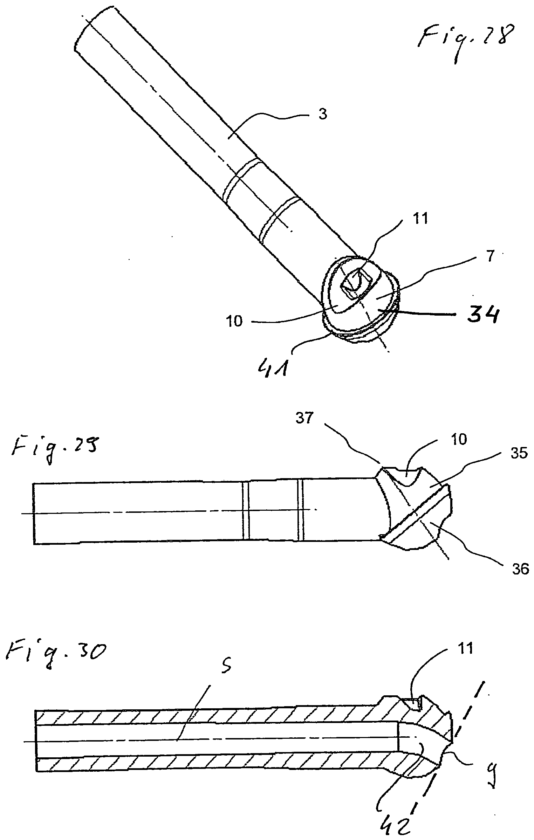

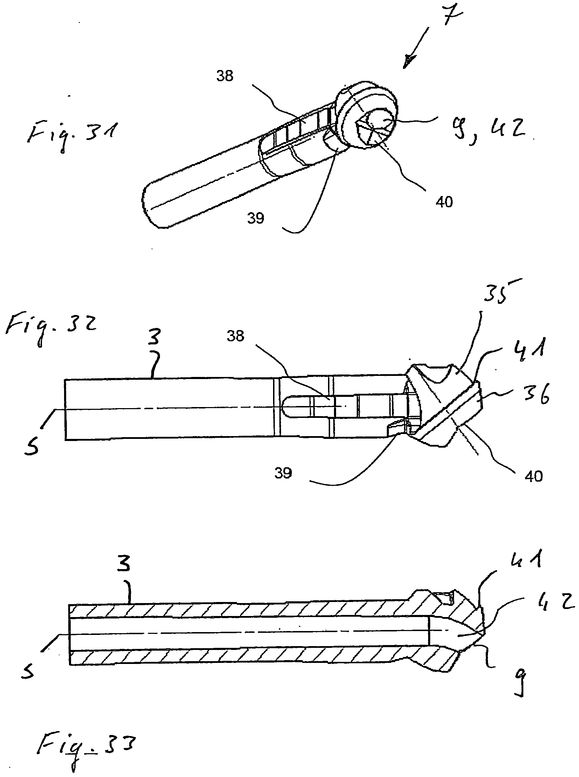

Figuren 28 bis 30 zeigen ein weiteres Ausführungsbeispiel eines Milchschlauchs 3. Der Milchschlauch 3 weist einen Klemmkörper 7 auf. Der Klemmkörper 7 ist in dem dargestellten Ausführungsbeispiel zweiteilig ausgebildet. Er weist ein oberes kugelförmiges Teil 35 und ein unteres kugelförmiges Teil 36 auf. Aus der Darstellung, insbesondere nach Figur 31 ist ersichtlich, dass der Durchmesser des kugelförmigen Teils 35 kleiner ist als der Durchmesser des unteren kugelförmigen Teils 36, so dass ein Rand 41 gebildet ist. Die Achsen der zwei Teile 35, 36 liegen auf einer gemeinsamen Geraden. Aus der Darstellung nach Figur 31 ist erkennbar, dass die Trennebene zwischen den zwei kugelförmigen Teilen 35, 36 bzw. der Rand 41 unter einem Winkel gegenüber der Längsachse S des Milchschlauchs geneigt ist.

Aus der Darstellung nach Figur 30 ist des Weiteren entnehmbar, dass die Mündung 9 des Kanals 42 in einer Ebene liegt, die von der Längsachse S des Milchschlauchs unter einem von 90° verschiedenen Winkel durchdrungen wird. Die gedachte Ebene ist in der Figur 30 gestrichelt dargestellt.

Aus den Figuren 31 bis 33 ist ein noch weiteres Ausführungsbeispiels eines Milchschlauchs 3 entnehmbar. Der prinzipielle Aufbau des Milchschlauchs 3, wie er in den Figuren 31 bis 33 dargestellt ist, entspricht im Wesentlichen dem Aufbau des Milchschlauchs 3 nach den Figuren 28 bis 30.

Die Ausführungsform, wie sie in den Figuren 31 bis 33 dargestellt ist, unterscheidet sich von dem Ausführungsbeispiel, wie es in den Figuren 28 bis 30 dargestellt ist dadurch, dass der Milchschlauch benachbart zum Klemmkörper 7 radial auswärts gerichtete Vorsprünge 38 aufweist, die sich vom Klemmkörper 7 über einen Teil der Länge des Milchschlauchs 3 erstrecken. Es sind vorzugsweise zwei Vorsprünge 38 vorgesehen, die um 180° versetzt zueinander ausgebildet sind. Durch die Vorsprünge 38 wird ein Knicken des Milchschlauchs 3 in dem Bereich, in dem sich die Vorsprünge befinden, im Wesentlichen verhindert. Die Wandstärke im Bereich der Vorsprünge ist größer als in dem anderen Bereich des Melkschlauchs, wodurch die Steifigkeit des Milchschlauchs in diesem Bereich noch erhöht wird. Andere Maßnahmen können auch zweckmäßig sein.

Aus der Darstellung in den Figuren 31 bis 33 ist des Weiteren erkennbar, dass benachbart zum unteren kugelförmigen Körper 36 eine Kerbe 39 vorgesehen ist. Durch diese Kerbe 39 werden mögliche Verformungen, die durch Biegen oder Ziehen entstehen können, auf den Bereich der Kerbe beschränkt. Durch diese Kerbe wird erreicht, dass eine Verformung in den Klemmkörper nicht eingeleitet wird, was insbesondere dann vorteilhaft ist, wenn der Klemmkörper mit dem Milchschlauch integral aus einem Werkstoff gebildet ist. Durch die Vermeidung der Verformung, die in den Klemmkörper eingeleitet wird, wird auch verhindert, dass die Dichtflächen des Klemmkörpers 7 nicht verformt werden und somit eine erhöhte Dichtigkeit erreicht wird.

Aus den Figuren 31 und 33 ist ersichtlich, dass in dem Klemmkörper 7 im Bereich der Mündung 9 eine Aussparung 40 vorgesehen ist. Durch die Aussparung 40 wird sicher gestellt, dass bspw. während eines Spülvorgangs und in Abhängigkeit von der Stellung des Milchschlauchs relativ zum Milchsammelstück keine Reinigungsflüssigkeit im Milchsammelstück zurück bleibt sondern in den Milchschlauch zurück fließen würde. Durch die Aussparung 40 wird sicher gestellt, dass unabhängig von der Lage des Klemmkörpers relativ zu einem Milchsammelstück Reinigungsflüssigkeit in den Milchschlauch fließen kann.

### Bezugszeichenliste

- 1: Melkbecher
- 2: Zitzengummi
- 3: Milchschlauch
- 4: Klemmeinheit
- 5: Klemmverbindung
- 6: erste Klemmbacke
- 7: kugelförmiger Klemmkörper
- 8: zweite Klemmbacke
- 9: Mündung
- 10: Bereich
- 11: Nut
- 12: Ausnehmung
- 13: Anschluss
- 14: Dichtsitz
- 15: Klemmkörper
- 16: Kragen
- 17: Anschlag
- 18: Abschnitt
- 19: Klemmkörper
- 20: Durchgang
- 21: Öffnung
- 22: Adapter
- 23: Milchsammelstück
- 24: Tragkörper
- 25: Aufnahmeraum
- 26: Vorsprung
- 27: Durchbrechung
- 28: Vertiefung
- 29: Verbindungselement
- 30: Aufnahme
- 31: Tragkörper
- 32: Rastelement
- 33: Rastmittel
- 34: Mantelfläche
- 35: oberer kugelförmiger Teil
- 36: unterer kugelförmiger Teil
- 37: Achsen der Teile
- 38: Verstärkungsrippe
- 39: Kerbe
- 40: Aussparung
- 41: Rand
- 42: Kanal

## Patentansprüche

1. Milchschlauch (3), der an wenigstens einem Ende einen im Wesentlichen kugelförmig ausgebildeten Klemmkörper (7) aufweist, **dadurch gekennzeichnet, dass** der Mittelpunkt des Klemmkörpers (7) versetzt zur Längsachse (S) des Milchschlauchs (3) liegt und/oder der Klemmkörper (7) einen Kanal (42) mit einer Mündung (9) aufweist, wobei die Längsachse (S) eine Ebene, in der die Querschnittsfläche der Mündung (9) liegt, unter einem von 90° verschiedenen Winkel durchdringt.

2. Milchschlauch nach Anspruch 1, **dadurch gekennzeichnet, dass** der Klemmkörper (7) aus wenigstens zwei unterschiedlich großen im Wesentlichen kugelförmig ausgebildeten Teilen (35, 36) gebildet ist.

3. Milchschlauch nach Anspruch 2, **dadurch gekennzeichnet, dass** die zwei Teile (35, 36) eine Trennebene aufweisen, die unter einem Winkel von 35° bis 40° gegenüber der Milchschlauchachse geneigt ist.

4. Milchschlauch nach Anspruch 3, **dadurch gekennzeichnet, dass** die zwei Teile (35, 36) jeweils eine Achse aufweisen, die auf einer Geraden liegen, wobei diese Gerade in einer Symmetrieebene des Milchschlauches (3) liegt.

5. Milchschlauch nach Anspruch 2, 3 oder 4, **dadurch gekennzeichnet, dass** wenigstens ein Teil des Klemmkörpers im Querschnitt im Wesentlichen ellipsenförmig ausgebildet ist.

6. Milchschlauch nach wenigstens einem der vorhergehenden Ansprüche 1 bis 5, **dadurch gekennzeichnet, dass** der Klemmkörper (7) einen Bereich (10) mit einer im Wesentlichen teilzylindrischen Mantelfläche (34) aufweist.

7. Milchschlauch nach einem der Ansprüche 1 bis 6, **dadurch gekennzeichnet, dass** der Bereich (10) eine im wesentlichen parallel zur Längsachse des Milchschlauchs (3) verlaufende Achse aufweist.

8. Milchschlauch nach Anspruch 6 oder 7, **dadurch gekennzeichnet, dass** die Mantelfläche (34) im Wesentlichen ellipsenförmig ist.

9. Milchschlauch nach wenigstens einem der vorhergehenden Ansprüche 1 bis 9, **dadurch gekennzeichnet, dass** dieser einteilig, vorzugsweise einstückig ausgebildet ist.

10. Milchschlauch, nach wenigstens einem der Ansprüche 1 bis 9, **dadurch gekennzeichnet, dass** der Milchschlauch mit einem Zitzengummi einstückig ausgebildet ist.

11. Melkeinheit umfassend ein Milchsammelstück (23), und wenigstens zwei mit dem Milchsammelstück (23) verbundene Milchschläuche (3), und wenigstens eine lösbare Klemmverbindung (5) zum Festlegen wenigstens eines Milchschlauchs (3) relativ zum Milchsammelstück (23), wobei die Klemmverbindung (5) wenigstens zwei Klemmbacken (6, 8) umfasst, zwischen denen ein am Endbereich des Milchschlauchs (3) ausgebildeter Klemmkörper (7, 15, 19) positionierbar ist, **dadurch gekennzeichnet, dass** der wenigstens eine Milchschlauch (3), an wenigstens einem Ende einen im Wesentlichen kugelförmig ausgebildeten Klemmkörper (7) aufweist, wobei der Mittelpunkt des Klemmkörpers (7) versetzt zur Längsachse (S) des Milchschlauchs (3) liegt und/oder der Klemmkörper (7) einen Kanal (42) mit einer Mündung (9) aufweist, wobei die Längsachse (S) eine Ebene, in der die Querschnittsfläche der Mündung (9) liegt, unter einem von 90° verschiedenen Winkel durchdringt.

12. Melkeinheit nach Anspruch 11, **dadurch gekennzeichnet, dass** die Klemmverbindung (5) so ausgebildet ist, dass der Endbereich des Milchschlauchs bei gelöster Klemmverbindung wenigstens zwei Freiheitsgrade aufweist.

13. Melkeinheit nach Anspruch 11 oder 12, **dadurch gekennzeichnet, dass** der Klemmkörper (7, 15, 19) einen im wesentlichen polygonalen, vorzugsweise kreisförmigen Querschnitt und die wenigstens eine Klemmbacke (6, 8) eine an den Klemmkörper (7, 15, 19) angepasste Kontur aufweist.

14. Melkeinheit nach Anspruch 11, 12 oder 13, **dadurch gekennzeichnet, dass** der Klemmkörper (7, 15, 19) ein integraler Bestandteil des Milchschlauchs (3) ist.

15. Melkeinheit nach wenigstens einem der vorhergehenden Ansprüche 11 bis 14, **dadurch gekennzeichnet, dass** wenigstens eine Klemmbacke (6, 8) eine Durchbrechung (27) aufweist, durch die sich der wenigstens eine Milchschlauch (3) wenigstens teilweise hindurcherstreckt.

16. Melkeinheit nach einem der Ansprüche 11 bis 15, **dadurch gekennzeichnet, dass** wenigstens eine Klemmbacke (6, 8) austauschbar ist.

17. Melkeinheit nach wenigstens einem der vorhergehenden Ansprüche 15 bis 16, **dadurch gekennzeichnet, dass** der Klemmkörper (7, 15, 19) aus einem sich vom Werkstoff des Milchschlauchs (3) unterscheidenden Werkstoff gebildet ist.

18. Melkeinheit nach Anspruch 17, **dadurch gekennzeichnet, dass** der Klemmkörper (7, 15, 19) und der Milchschlauch (3) nach dem MehrKomponenten-Spritzverfahren, insbesondere nach dem ZweiKomponenten-Spritzverfahren hergestellt sind.

19. Melkeinheit nach wenigstens einem der vorhergehenden Ansprüche 11 bis 19, **dadurch gekennzeichnet, dass** der Milchschlauch (3) wenigstens einen gekrümmt ausgebildeten Abschnitt (18) aufweist.

20. Melkeinheit nach Anspruch 19, **dadurch gekennzeichnet, dass** der wenigstens eine Abschnitt (18) benachbart zum Milchsammelstück (23) ausgebildet ist.

21. Melkeinheit nach wenigstens einem der vorhergehenden Ansprüche 11 bis 20, **dadurch gekennzeichnet, dass** für wenigstens zwei Klemmverbindungen (7) eine gemeinsame Klemmeinheit (4) vorgesehen ist.

22. Melkeinheit nach Anspruch 21, **dadurch gekennzeichnet, dass** die Klemmeinheit (4) einen Tragkörper (24) aufweist, der mit wenigstens zwei Klemmbacken (8) verbunden ist, wobei wenigstens eine Klemmbacke (8) relativ zum Tragkörper (24) positionierbar ist.

23. Melkeinheit nach einem der Ansprüche 11 bis 22, **dadurch gekennzeichnet, dass** die wenigstens eine Klemmbacke (8) verschwenkbar, vorzugsweise verdrehbar mit dem Tragkörper (24) verbunden ist.

24. Melkeinheit nach Anspruch 22 oder 23, **dadurch gekennzeichnet, dass** die wenigstens eine Klemmbacke (8) lösbar mit dem Tragkörper (24) verbunden ist.

25. Melkeinheit umfassend ein Milchsammelstück (23), wenigstens zwei mit dem Milchsammelstück (23) verbundene Milchschläuche (3) und wenigstens eine lösbare Klemmverbindung (5) zum Festlegen wenigstens eines Milchschlauchs (3) relativ zum Milchsammelstück (23), wobei die Klemmverbindung (5) wenigstens zwei Klemmbacken (6, 8) umfasst, zwischen denen ein am Endbereich des Milchschlauchs (3) ausgebildeter Klemmkörper (7, 15, 19) positionierbar ist, **dadurch gekennzeichnet dass**, wenigstens zwei Milchschläuche (3) bei gelöster Klemmverbindung verschwenkbar mit dem Milchsammelstück (23) verbunden sind, dass die Längsachsen (S) der Milchschläuche (3) zwischen dem Milchschlauch (3) und dem Milchsammelstück (23) jeweils einen theoretischen Kegel mit einem Öffnungswinkel beschreiben,
dass die Längsachsen zweier benachbarter Milchschläuche (S) einen Winkel einschließen, der kleiner als ein Öffnungswinkel ist.

26. Melkeinheit nach Anspruch 25, **dadurch gekennzeichnet, dass** die Klemmverbindung (5) so ausgebildet ist, dass der Endbereich des Milchschlauchs bei gelöster Klemmverbindung wenigstens zwei Freiheitsgrade aufweist.

27. Melkeinheit nach Anspruch 25 oder 26, **dadurch gekennzeichnet, dass** der Klemmkörper (7, 15, 19) einen im Wesentlichen polygonalen, vorzugsweise kreisförmigen Querschnitt und die wenigstens eine Klemmbacke (6, 8) eine an den Klemmkörper (7, 15, 19) angepasste Kontur aufweist.

28. Melkeinheit nach Anspruch 25, 26 oder 27, **dadurch gekennzeichnet, dass** der Klemmkörper (7, 15, 19) ein integraler Bestandteil des Milchschlauchs (3) ist.

29. Melkeinheit nach wenigstens einem der vorhergehenden Ansprüche 25 bis 28, **dadurch gekennzeichnet, dass** wenigstens eine Klemmbacke (6, 8) eine Durchbrechung (27) aufweist, durch die sich der wenigstens eine Milchschlauch (3) wenigstens teilweise hindurcherstreckt.

30. Melkeinheit nach einem der Ansprüche 25 bis 29, **dadurch gekennzeichnet, dass** wenigstens eine Klemmbacke (6, 8) austauschbar ist.

31. Melkeinheit nach wenigstens einem der vorhergehenden Ansprüche 25 bis 30, **dadurch gekennzeichnet, dass** der Klemmkörper (7, 15, 19) aus einem sich vom Werkstoff des Milchschlauchs (3) unterscheidenden Werkstoff gebildet ist.

32. Melkeinheit nach Anspruch 31, **dadurch gekennzeichnet, dass** der Klemmkörper (7, 15, 19) und der Milchschlauch (3) nach dem MehrKomponenten-Spritzverfahren, insbesondere nach dem ZweiKomponenten-Spritzverfahren hergestellt sind.

33. Melkeinheit nach wenigstens einem der vorhergehenden Ansprüche 25 bis 32, **dadurch gekennzeichnet, dass** der Milchschlauch (3) wenigstens einen gekrümmt ausgebildeten Abschnitt (18) aufweist.

34. Melkeinheit nach Anspruch 33, **dadurch gekennzeichnet, dass** der wenigstens eine Abschnitt (18) benachbart zum Milchsammelstück (23) ausgebildet ist.

35. Melkeinheit nach wenigstens einem der vorhergehenden Ansprüche 25 bis 34, **dadurch gekennzeichnet, dass** für wenigstens zwei Klemmverbindungen (7) eine gemeinsame Klemmeinheit (4) vorgesehen ist.

36. Melkeinheit nach Anspruch 35, **dadurch gekennzeichnet, dass** die Klemmeinheit (4) einen Tragkörper (24) aufweist, der mit wenigstens zwei Klemmbacken (8) verbunden ist, wobei wenigstens eine Klemmbacke (8) relativ zum Tragkörper (24) positionierbar ist.

37. Melkeinheit nach einem der Ansprüche 25 bis 36, **dadurch gekennzeichnet, dass** die wenigstens eine Klemmbacke (8) verschwenkbar, vorzugsweise verdrehbar mit dem Tragkörper (24) verbunden ist.

38. Melkeinheit nach Anspruch 36 oder 37, **dadurch gekennzeichnet, dass** die wenigstens eine Klemmbacke (8) lösbar mit dem Tragkörper (24) verbunden ist.

39. Melkeinheit nach wenigstens einem der vorhergehenden Ansprüche 25 bis 38, **dadurch gekennzeichnet, dass** wenigstens eine Klemmbacke (8) wenigstens einen Vorsprung (26) aufweist, der zur Anlage an den Klemmkörper (7, 15, 19) bringbar ist.

40. Melkeinheit nach Anspruch 39, **dadurch gekennzeichnet, dass** der Klemmkörper (7, 15, 19) eine Ausnehmung (11) aufweist, in die der wenigstens eine Vorsprung wenigstens teilweise hineinragt.

41. Melkeinheit nach einem der Ansprüche 11 bis 40, **dadurch gekennzeichnet, dass** der Milchschlauch nach einem der Ansprüche 1 bis 10 ausgebildet ist.

42. Melkbecher umfassend eine Melkbecherhülse, in der ein Zitzengummi angeordnet ist, und einen mit dem Zitzengummi verbundenen Milchschlauch,
**dadurch gekennzeichnet, dass**
die Verbindung zwischen dem Zitzengummi und dem Milchschlauch durch eine lösbare Klemmverbindung (5) gebildet ist, wobei die Klemmverbindung (5) wenigstens zwei Klemmbacken (6, 8) umfasst, zwischen denen ein am Endbereich des Milchschlauchs (3) ausgebildeter Klemmkörper (7, 15, 19) positionierbar ist.

43. Melkbecher nach Anspruch 42, **dadurch gekennzeichnet, dass** der Milchschlauch nach einem der Ansprüche 1 bis 10 ausgebildet ist.

44. Melkzeug umfassend ein Milchsammelstück, wenigstens zwei Melkbecher, die jeweils eine Melkbecherhülse und ein in der Melkbecherhülse angeordnetes Zitzengummi aufweisen, und Milchschläuche, die die Melkbecher mit dem Milchsammelstück verbinden, **gekennzeichnet durch** wenigstens eine erste Klemmverbindung zwischen einem Milchschlauch und dem Milchsammelstück und eine zweite Klemmverbindung zwischen einem Milchschlauch und der Melkbecherhülse, wobei wenigstens ein Melkschlauch (3) nach einem der Ansprüche 1 bis 10 ausgebildet ist.

## Claims

1. Milk tube (3) which has at at least one end an essentially spherically designed clamping body (7), **characterized in that** the center of the clamping body (7) lies offset with respect to the longitudinal axis (S) of the milk tube (3), and/or the clamping body (7) has a duct (42) with an outlet (9), the longitudinal axis (S) penetrating a plane, in which the cross-sectional area of the outlet (9) lies, at an angle different from 90°.

2. Milk tube according to Claim 1, **characterized in that** the clamping body (7) is formed from at least two essentially spherically designed parts (35, 36) of different size.

3. Milk tube according to Claim 2, **characterized in that** the two parts (35, 36) have a parting plane which is inclined at an angle of 35° to 40° with respect to the milk tube axis.

4. Milk tube according to Claim 3, **characterized in that** the two parts (35, 36) have in each case an axis lying on a straight line, this straight line lying in a plane of symmetry of the milk tube (3).

5. Milk tube according to Claim 2, 3 or 4, **characterized in that** at least one part of the clamping body is designed with an essentially elliptic cross section.

6. Milk tube according to at least one of the preceding Claims 1 to 5, **characterized in that** the clamping body (7) has a region (10) with an essentially part-cylindrical surface area (34).

7. Milk tube according to one of Claims 1 to 6, **characterized in that** a region (10) has an axis running essentially parallel to the longitudinal axis of the milk tube (3).

8. Milk tube according to Claim 6 or 7, **characterized in that** the surface area (34) is essentially elliptic.

9. Milk tube according to at least one of the preceding Claims 1 to 9, **characterized in that** this is produced in one part, preferably in one piece.

10. Milk tube according to at least one of Claims 1 to 9, **characterized in that** the milk tube is produced in one piece with a teat rubber.

11. Milking unit comprising a milk collection piece (23) and at least two milk tubes (3) connected to the milk collection piece (23), and at least one releasable clamping connection (5) for securing at least one milk tube (3) in relation to the milk collection piece (23), wherein the clamping connection (5) comprising at least two clamping jaws (6, 8), between which a clamping body (7, 15, 19) formed at the end region of the milk tube (3) can be positioned, **characterized in that** the at least one milk tube (3) has at least one end an essentially spherically designed clamping body (7), wherein the center of the clamping body (7) lies offset with respect to the longitudinal axis (S) of the milk tube (3), and/or the clamping body (7) has a duct (42) with an outlet(9), wherein the longitudinal axis (S) penetrating a plane, in which the cross-sectional area of the outlet (9) lies, at an angle different from 90°.

12. Milking unit according to Claim 11, **characterized in that** the clamping connection (5) is designed such that the end region of the milk tube has at least two degrees of freedom when the clamping connection is released.

13. Milking unit according to Claim 11 or 12, **characterized in that** the clamping body (7, 15, 19) has an essentially polygonal, preferably circular cross section, and the at least one clamping jaw (6, 8) has a contour adapted to the clamping body (7, 15, 19).

14. Milking unit according to Claim 11, 12 or 13, **characterized in that** the clamping body (7, 15, 19) is an integral constituent of the milk tube (3).

15. Milking unit according to at least one of the preceding Claims 11 to 14, **characterized in that** at least one clamping jaw (6, 8) has a perforation (27), through which the at least one milk tube (3) at least partially extends.

16. Milking unit according to one of Claims 11 to 15, **characterized in that** at least one clamping jaw (6, 8) is exchangeable.

17. Milking unit according to at least one of the preceding Claims 15 to 16, **characterized in that** the clamping body (7, 15, 19) is formed from a material differing from the material of the milk tube (3).

18. Milking unit according to Claim 17, **characterized in that** the clamping body (7, 15, 19) and the milk tube (3) are produced according to the multi-component injection molding method, in particular according to the two-component injection molding method.

19. Milking unit according to at least one of the preceding Claims 11 to 19, **characterized in that** the milk tube (3) has at least one segment (18) of curved design.

20. Milking unit according to Claim 19, **characterized in that** the at least one segment (18) is formed adjacently to the milk collection piece (23).

21. Milking unit according to at least one of the preceding Claims 11 to 20, **characterized in that** one common clamping unit (4) is provided for at least two clamping connections (7)

22. Milking unit according to Claim 21, **characterized in that** the clamping unit (4) has a carrying body (24) which is connected to at least two clamping jaws (8), at least one clamping jaw (8) being positionable in relation to the carrying body (24).

23. Milking unit according to one of Claims 11 to 22, **characterized in that** the at least one clamping jaw (8) is connected pivotably, preferably rotatably, to the carrying body (24).

24. Milking unit according to Claim 22 or 23, **characterized in that** the at least one clamping jaw (8) is connected releasably to the carrying body (24).

25. Milking unit comprising a milk collection piece (23), at least two milk tubes (3) connected to the milk collection piece (23), and at least one releasable clamping connection (5) for securing at least one milk tube (3) in relation to the milk collection piece (23), wherein the clamping connection (5) comprising at least two clamping jaws (6, 8), between which a clamping body (7, 15, 19) formed at the end region of the milk tube (3) can be positioned, **characterized in that**, when the clamping connection is released, at least two milk tubes (3) are connected pivotably to the milk collection piece (23), **in that** the longitudinal axes (S) of the milk tubes (3) between the milk tube (3) and the milk collection piece (23) in each case describe a theoretical cone with an aperture angle, and **in that** the longitudinal axes of two adjacent milk tubes (S) form an angle which is smaller than an aperture angle.

26. Milking unit according to Claim 25, **characterized in that** the clamping connection (5) is designed such that the end region of the milk tube has at least two degrees of freedom when the clamping connection is released.

27. Milking unit according to Claim 25 or 26, **characterized in that** the clamping body (7, 15, 19) has an essentially polygonal, preferably circular cross section, and the at least one clamping jaw (6, 8) has a contour adapted to the clamping body (7, 15, 19).

28. Milking unit according to Claim 25, 26 or 27, **characterized in that** the clamping body (7, 15, 19) is an integral constituent of the milk tube (3).

29. Milking unit according to at least one of the preceding Claims 25 to 28, **characterized in that** at least one clamping jaw (6, 8) has a perforation (27), through which the at least one milk tube (3) at least partially extends.

30. Milking unit according to one of Claims 25 to 29, **characterized in that** at least one clamping jaw (6, 8) is exchangeable.

31. Milking unit according to at least one of the preceding Claims 25 to 30, **characterized in that** the clamping body (7, 15, 19) is formed from a material differing from the material of the milk tube (3).

32. Milking unit according to Claim 31, **characterized in that** the clamping body (7, 15, 19) and the milk tube (3) are produced according to the multi-component injection molding method, in particular according to the two-component injection molding method.

33. Milking unit according to at least one of the preceding Claims 25 to 32, **characterized in that** the milk tube (3) has at least one segment (18) of curved design.

34. Milking unit according to Claim 33, **characterized in that** the at least one segment (18) is formed adjacently to the milk collection piece (23).

35. Milking unit according to at least one of the preceding Claims 25 to 34, **characterized in that** one common clamping unit (4) is provided for at least two clamping connections (7).

36. Milking unit according to Claim 35, **characterized in that** the clamping unit (4) has a carrying body (24) which is connected to at least two clamping jaws (8), wherein at least one clamping jaw (8) is positionable in relation to the carrying body (24).

37. Milking unit according to one of Claims 25 to 36, **characterized in that** the at least one clamping jaw (8) is connected pivotably, preferably rotatably, to the carrying body (24).

38. Milking unit according to Claim 36 or 37, **characterized in that** the at least one clamping jaw (8) is connected releasably to the carrying body (24).

39. Milking unit according to at least one of the preceding Claims 25 to 38, **characterized in that** at least one clamping jaw (8) has at least one projection which can be brought to bear against the clamping body (7, 15, 19).

40. Milking unit according to Claim 39, **characterized in that** the clamping body (7, 15, 19) has a recess (11), into which the at least one projection at least partially projects.

41. Milking unit according to one of Claims 11 to 40, **characterized in that** the milk tube is designed according to one of Claims 1 to 10.

42. Milking cup comprising a milking cup sleeve, in which a teat rubber is arranged, and a milk tube connected to the teat rubber, **characterized in that** the connection between the teat rubber and the milk tube is formed by a releasable clamping connection (5), the clamping connection (5) comprising at least two clamping jaws (6, 8), between which a clamping body (7, 15, 19) formed at the end region of the milk tube (3) can be positioned.

43. Milking cup according to Claim 42, **characterized in that** the milk tube is designed according to one of Claims 1 to 10.

44. Milking appliance comprising a milk collection piece, at least two milking cups which have in each case a milking cup sleeve and a teat rubber arranged in the milking cup sleeve, and milk tubes which connect the milking cups to the milk collection piece, **characterized by** at least one first clamping connection between a milk tube and the milk collection piece and a second clamping connection between a milk tube and the milking cup sleeve, wherein at least one milk tube (3) is designed according to one of Claims 1 to 10.

## Revendications

1. Tuyau à lait (3), qui présente à au moins une extrémité un corps de serrage (7) de forme essentiellement sphérique, **caractérisé en ce que** le point central du corps de serrage (7) est décalé par rapport à l'axe longitudinal (S) du tuyau à lait (3) et/ou le corps de serrage (7) présente un canal (42) avec une embouchure (9), dans lequel l'axe longitudinal (S) traverse, sous un angle différent de 90°, un plan dans lequel se trouve la face de section transversale de l'embouchure (9).

2. Tuyau à lait selon la revendication 1, **caractérisé en ce que** le corps de serrage (7) est formé d'au moins deux parties (35, 36) de forme essentiellement sphérique et de grandeur différente.

3. Tuyau à lait selon la revendication 2, **caractérisé en ce que** les deux parties (35, 36) présentent un plan de séparation, qui est incliné d'un angle de 35° à 40° par rapport à l'axe du tuyau à lait.

4. Tuyau à lait selon la revendication 3, **caractérisé en ce que** les deux parties (35, 36) présentent chacune un axe, axes qui sont situés sur une droite, dans lequel cette droite se trouve dans un plan de symétrie du tuyau à lait (3).

5. Tuyau à lait selon la revendication 2, 3 ou 4, **caractérisé en ce qu'**au moins une partie du corps de serrage présente une section transversale de forme essentiellement elliptique.

6. Tuyau à lait selon au moins une des revendications précédentes 1 à 5, **caractérisé en ce que** le corps de serrage (7) présente une région (10) avec une surface latérale essentiellement partiellement cylindrique (34).

7. Tuyau à lait selon une des revendications 1 à 6, **caractérisé en ce que** la région (10) présente un axe qui est essentiellement parallèle à l'axe longitudinal du tuyau à lait (3).

8. Tuyau à lait selon la revendication 6 ou 7, **caractérisé en ce que** la surface latérale (34) est de forme essentiellement elliptique.

9. Tuyau à lait selon au moins une des revendications précédentes 1 à 9, **caractérisé en ce qu'**il est réalisé en une partie, de préférence en une seule pièce.

10. Tuyau à lait selon au moins une des revendications 1 à 9, **caractérisé en ce que** le tuyau à lait est réalisé en une seule pièce avec un manchon trayeur.

11. Unité de traite comprenant un collecteur (23) et au moins deux tuyaux à lait (3) raccordés au collecteur (23), et au moins une connexion par serrage détachable (5) pour la fixation d'au moins un tuyau à lait (3) par rapport au collecteur (23), dans laquelle la connexion par serrage (5) comprend au moins deux mâchoires de serrage (6, 8), entre lesquelles un corps de serrage (7, 15, 19) formé sur la région d'extrémité du tuyau à lait (3) peut être positionné, **caractérisée en ce que** ledit au moins un tuyau à lait (3) présente à au moins une extrémité un corps de serrage (7) de forme essentiellement sphérique, dans laquelle le point central du corps de serrage (7) est décalé par rapport à l'axe longitudinal (S) du tuyau à lait (3) et/ou le corps de serrage (7) présente un canal (42) avec une embouchure (9), dans laquelle l'axe longitudinal (S) traverse, sous un angle différent de 90°, un plan dans lequel se trouve la face de section transversale de l'embouchure (9).

12. Unité de traite selon la revendication 11, **caractérisée en ce que** la connexion par serrage (5) est configurée de telle manière que la région d'extrémité du tuyau à lait présente au moins deux degrés de liberté lorsque la connexion par serrage est détachée.

13. Unité de traite selon la revendication 11 ou 12, **caractérisée en ce que** le corps de serrage (7, 15, 19) présente une section transversale essentiellement polygonale, de préférence circulaire, et ladite au moins une mâchoire de serrage (6, 8) présente un contour adapté au corps de serrage (7, 15, 19).

14. Unité de traite selon la revendication 11, 12 ou 13, **caractérisée en ce que** le corps de serrage (7, 15, 19) fait partie intégrante du tuyau à lait (3).

15. Unité de traite selon au moins une des revendications 11 à 14, **caractérisée en ce qu'**au moins une mâchoire de serrage (6, 8) présente une percée (27), à travers laquelle ledit au moins un tuyau à lait (3) s'étend au moins en partie.

16. Unité de traite selon une des revendications 11 à 15, **caractérisée en ce que** ladite au moins une mâchoire de serrage (6, 8) est remplaçable.

17. Unité de traite selon au moins une des revendications précédentes 15 à 16, **caractérisée en ce que** le corps de serrage (7, 15, 19) est formé d'un matériau différent du matériau du tuyau à lait (3).

18. Unité de traite selon la revendication 17, **caractérisée en ce que** le corps de serrage (7, 15, 19) et le tuyau à lait (3) ont été fabriqués par le procédé d'injection à plusieurs composants, en particulier par le procédé d'injection à deux composants.

19. Unité de traite selon au moins une des revendications précédentes 11 à 19, **caractérisée en ce que** le tuyau à lait (3) présente au moins une section de forme coudée (18).

20. Unité de traite selon la revendication 19, **caractérisée en ce que** ladite au moins une section (18) est formée à proximité du collecteur (23).

21. Unité de traite selon au moins une des revendications précédentes 11 à 20, **caractérisée en ce qu'**il est prévu une unité de serrage commune (4) pour au moins deux connexions par serrage (7).

22. Unité de traite selon la revendication 21, **caractérisée en ce que** l'unité de serrage (4) présente un corps de support (24), qui est relié à au moins deux mâchoires de serrage (8), dans laquelle au moins une mâchoire de serrage (8) peut être positionnée par rapport au corps de support (24).

23. Unité de traite selon au moins une des revendications 11 à 22, **caractérisée en ce que** ladite au moins une mâchoire de serrage (8) est reliée au corps de support (24) de façon pivotante, de préférence de façon rotative.

24. Unité de traite selon la revendication 22 ou 23, **caractérisée en ce que** ladite au moins une mâchoire de serrage (8) est reliée au corps de support (24) de façon séparable.

25. Unité de traite comprenant un collecteur (23), au moins deux tuyaux à lait (3) raccordés au collecteur (23), et au moins une connexion par serrage détachable (5) pour la fixation d'au moins un tuyau à lait (3) par rapport au collecteur (23), dans laquelle la connexion par serrage (5) comprend au moins deux mâchoires de serrage (6, 8), entre lesquelles un corps de serrage (7, 15, 19) formé sur la région d'extrémité du tuyau à lait (3) peut être positionné, **caractérisée en ce qu'**au moins deux tuyaux à lait (3) sont raccordés de façon pivotante au collecteur (23) lorsque la connexion par serrage est détachée, **en ce que** les axes longitudinaux (S) des tuyaux à lait (3) décrivent respectivement entre le tuyau à lait (3) et le collecteur (23) un cône théorique avec un angle d'ouverture, **en ce que** les axes longitudinaux (S) de deux tuyaux à lait voisins forment un angle, qui est plus petit que l'angle d'ouverture.

26. Unité de traite selon la revendication 25, **caractérisée en ce que** la connexion par serrage (5) est configurée de telle manière que la région d'extrémité du tuyau à lait présente au moins deux degrés de liberté lorsque la connexion par serrage est détachée.

27. Unité de traite selon la revendication 25 ou 26, **caractérisée en ce que** le corps de serrage (7, 15, 19) présente une section transversale essentiellement polygonale, de préférence circulaire, et ladite au moins une mâchoire de serrage (6, 8) présente un contour adapté au corps de serrage (7, 15, 19).

28. Unité de traite selon la revendication 25, 26 ou 27, **caractérisée en ce que** le corps de serrage (7, 15, 19) fait partie intégrante du tuyau à lait (3).

29. Unité de traite selon au moins une des revendications précédentes 25 à 28, **caractérisée en ce qu'**au moins une mâchoire de serrage (6, 8) présente une percée (27), à travers laquelle ledit au moins un tuyau à lait (3) s'étend au moins en partie.

30. Unité de traite selon une des revendications 25 à 29, **caractérisée en ce qu'**au moins une mâchoire de serrage (6, 8) est remplaçable.

31. Unité de traite selon au moins une des revendications précédentes 25 à 30, **caractérisée en ce que** le corps de serrage (7, 15, 19) est formé d'un matériau différent du matériau du tuyau à lait (3).

32. Unité de traite selon la revendication 31, **caractérisée en ce que** le corps de serrage (7, 15, 19) et le tuyau à lait (3) ont été fabriqués par le procédé d'injection à plusieurs composants, en particulier par le procédé d'injection à deux composants.

33. Unité de traite selon au moins une des revendications précédentes 25 à 32, **caractérisée en ce que** le tuyau à lait (3) présente au moins une section de forme coudée (18).

34. Unité de traite selon la revendication 33, **caractérisée en ce que** ladite au moins une section (18) est formée à proximité du collecteur (23).

35. Unité de traite selon au moins une des revendications précédentes 25 à 34, **caractérisée en ce qu'**il est prévu une unité de serrage commune (4) pour au moins deux connexions par serrage (7).

36. Unité de traite selon la revendication 35, **caractérisée en ce que** l'unité de serrage (4) présente un corps de support (24), qui est relié à au moins deux mâchoires de serrage (8), dans laquelle au moins une mâchoire de serrage (8) peut être positionnée par rapport au corps de support (24).

37. Unité de traite selon une des revendications 25 à 36, **caractérisée en ce que** ladite au moins une mâchoire de serrage (8) est reliée au corps de support (24) de façon pivotante, de préférence de façon rotative.

38. Unité de traite selon la revendication 36 ou 37, **caractérisée en ce que** ladite au moins une mâchoire de serrage (8) est reliée au corps de support (24) de façon séparable.

39. Unité de traite selon au moins une des revendications précédentes 25 à 38, **caractérisée en ce qu'**au moins une mâchoire de serrage (8) présente au moins une saillie (26), qui peut être amenée en appui sur le corps de serrage (7, 15, 19).

40. Unité de traite selon la revendication 39, **caractérisée en ce que** le corps de serrage (7, 15, 19) présente un évidement (11), dans lequel ladite au moins une saillie s'engage au moins en partie.

41. Unité de traite selon au moins une des revendications précédentes 11 à 40, **caractérisée en ce que** le tuyau à lait est réalisé selon l'une quelconque des revendications 1 à 10.

42. Gobelet complet comprenant un gobelet, dans lequel un manchon trayeur est disposé, et un tuyau à lait raccordé au manchon trayeur, **caractérisé en ce que** la connexion entre le manchon trayeur et le tuyau à lait est formée par une connexion par serrage détachable (5), dans lequel la connexion par serrage (5) comprend au moins deux mâchoires de serrage (6, 8), entre lesquelles un corps de serrage (7, 15, 19) formé sur la région d'extrémité du tuyau à lait (3) peut être positionné.

43. Gobelet complet selon la revendication 42, **caractérisé en ce que** le tuyau à lait est réalisé selon l'une quelconque des revendications 1 à 10.

44. Faisceau trayeur comprenant un collecteur, au moins deux gobelets complets, qui présentent chacun un gobelet et un manchon trayeur disposé dans le gobelet, et des tuyaux à lait, qui relient les gobelets complets au collecteur, **caractérisé par** au moins une première connexion par serrage entre un tuyau à lait et le collecteur et une deuxième connexion par serrage entre un tuyau à lait et le gobelet, dans lequel au moins un tuyau à lait (3) est réalisé selon l'une quelconque des revendications 1 à 10.
